(19) Europäisches Patentamt
European Patent Office
Office européen des brevets

(11) **EP 3 477 264 B1**

(12) **EUROPÄISCHE PATENTSCHRIFT**

(45) Veröffentlichungstag und Bekanntmachung des Hinweises auf die Patenterteilung:
**09.12.2020 Patentblatt 2020/50**

(51) Int Cl.:
***G01D 5/38*** *(2006.01)*

(21) Anmeldenummer: **18200009.1**

(22) Anmeldetag: **12.10.2018**

(54) **OPTISCHE POSITIONSMESSEINRICHTUNG**

OPTICAL POSITIONING DEVICE

DISPOSITIF OPTIQUE DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.10.2017 DE 102017219125**

(43) Veröffentlichungstag der Anmeldung:
**01.05.2019 Patentblatt 2019/18**

(73) Patentinhaber: **Dr. Johannes Heidenhain GmbH 83301 Traunreut (DE)**

(72) Erfinder:
• **HOLZAPFEL, Wolfgang 83119 Obing (DE)**
• **SÄNDIG, Karsten 83349 Palling (DE)**

(56) Entgegenhaltungen:
**DE-A1-102015 203 188**

**Beschreibung**

## GEBIET DER TECHNIK

Die vorliegende Erfindung betrifft eine optische Positionsmesseinrichtung gemäß dem Oberbegriff von Anspruch 1.

## STAND DER TECHNIK

In bekannten Positionsmesseinrichtungen zur Erfassung der Position von zwei zueinander beweglichen Objekten wird üblicherweise die Position einer Abtasteinheit relativ zu einem Maßstab entlang mindestens einer Messrichtung bestimmt. Auf dem Maßstab ist entlang einer Teilungsrichtung eine Messteilung angeordnet, die Teilungsrichtung der Messrichtung entspricht. Die Abtasteinheit und der Maßstab sind hierbei jeweils mit einem der beiden beweglichen Objekten verbunden. Der sogenannte Empfindlichkeitsvektor der Positionsmesseinrichtung, der die jeweilige effektive Messrichtung bezeichnet, ist in bekannten Vorrichtungen üblicherweise parallel zur Oberfläche des Maßstabs orientiert.

Desweiteren sind Positionsmesseinrichtungen bekannt, deren Empfindlichkeitsvektor schräg zur Oberfläche eines Maßstabs mit einer reflektiven Messteilung orientiert ist. Hierzu sei etwa auf die EP 1 762 828 A2 der Anmelderin verwiesen. Die geneigte Ausrichtung des Empfindlichkeitsvektors wird in einer derartigen Positionsmesseinrichtung durch eine asymmetrische Ausbildung des interferentiellen Abtaststrahlengangs sichergestellt. In entsprechenden Abtaststrahlengängen wird ein einfallendes Strahlenbündel in mindestens zwei Teilstrahlenbündel aufgespalten, die schließlich zur interferierenden Überlagerung gebracht werden. Mit Hilfe derartiger Positionsmesseinrichtungen können Positionsinformationen bezüglich einer Relativbewegung von Abtasteinheit und Maßstab entlang einer lateralen Mess- bzw. Verschiebungsrichtung als auch entlang einer vertikalen Mess- bzw. Verschiebungsrichtung gewonnen werden. Das heißt, mit Hilfe einer derartigen Positionsmesseinrichtung können Positionsänderungen entlang zweier translatorischer Bewegungs-Freiheitsgrade erfasst werden. Die Weglängen der interferierenden Teilstrahlenbündel sind in einer solchen Positionsmesseinrichtung üblicherweise nur in einem bestimmten Nenn-Abtastabstand zwischen Abtasteinheit und Maßstab gleich lang. Wird der Maßstab oder die Abtasteinheit aus dem jeweiligen Nenn-Abtastabstand heraus bewegt, so ergeben sich unterschiedliche zurückgelegte optische Weglängen in den zur Interferenz gelangenden Teilstrahlenbündeln. Eine eventuelle Änderung der Wellenlänge der verwendeten Lichtquelle beeinflusst damit die Phase der interferierenden Teilstrahlenbündel und somit auch die ermittelte Positionsinformation. Man bezeichnet die Abtastoptiken derartiger Positionsmesseinrichtungen deshalb als chromatisch bzw. wellenlängenabhängig. Die darin eingesetzte Lichtquelle muss deswegen eine ausreichende Kohärenzlänge und ein äußerst geringes Phasenrauschen aufweisen. Um dies zu gewährleisten ist eine aufwändige Stabilisierung einer derartigen Lichtquelle nötig, wodurch diese entsprechend teuer ist.

Aus der deutschen Patentanmeldung DE 10 2015 203 188 A1 der Anmelderin ist eine weitere optische Positionsmesseinrichtung bekannt, mittels der Positionsinformationen bezüglich einer Relativbewegung von Abtasteinheit und Maßstab entlang einer lateralen Mess- bzw. Verschiebungsrichtung als auch entlang einer vertikalen Mess- bzw. Verschiebungsrichtung gewonnen werden können. Hierbei wird die Abtastoptik um einen bestimmten Kippwinkel relativ zum Maßstab um eine Drehachse verkippt, die parallel zur Oberfläche des Maßstabs orientiert ist und sich senkrecht zum Gittervektor der Messteilung erstreckt. Neben der Wahl eines geeigneten Kippwinkels relativ zum Maßstab ist ferner vorgesehen, dass zur asymmetrischen Ausbildung des interferentiellen Abtaststrahlengangs zur Signalerzeugung Teilstrahlenbündel genutzt werden, die aus nicht-symmetrischen Beugungsordnungen an der Messteilung resultieren, z.B. die +3./-1. Beugungsordnungen oder aber die +1./0. Beugungsordnungen. Im Fall der Nutzung dieser Beugungsordnungen erweist sich jedoch als problematisch, dass entweder eine zu geringe Signalintensität und/oder eine zu geringe Anbautoleranz resultiert.

Aus Figur 2 der US 8,730,485 B2, von der bei der Bildung des Oberbegriffs von Anspruch 1 der vorliegenden Anmeldung ausgegangen wurde, ist eine weitere optische Positionsmesseinrichtung zur Erfassung von Positionsänderungen entlang zweier translatorischer Bewegungs-Freiheitsgrade bekannt. Diese nutzt unter Verwendung eines schräg auf die Messteilung einfallenden Strahlenbündels zur Signalerzeugung die +1./-1. Beugungsordnungen an der Messteilung und umgeht damit die Probleme aus der vorgenannten Druckschrift. Jedoch resultieren für die an der Messteilung aufgespalten Teilstrahlenbündel unterschiedliche optische Weglängen zwischen Aufspaltung und Wiedervereinigung. Dies hat wiederum eine Abhängigkeit der Positionsmessung von Wellenlängenschwankungen zur Folge.

## ZUSAMMENFASSUNG DER ERFINDUNG

Der vorliegenden Erfindung liegt die Aufgabe zugrunde, eine optische Positionsmesseinrichtung zu schaffen, die einen geneigten Empfindlichkeitsvektor aufweist, bei allen zulässigen Abtastabständen unempfindlich gegenüber Wellenlängenänderungen ist, eine hohe Signaleffizienz aufweist und möglichst große Anbautoleranzen besitzt.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung zur Erfassung der Position von zwei relativ zueinander beweglichen Objekten umfasst zum einen einen Maßstab, der mit einem der beiden Objekte verbunden ist und eine Messteilung mit einer periodischen Anordnung von Teilungsbereichen entlang mindestens einer Teilungsrichtung aufweist. Zum anderen ist eine am anderen Objekt angeordnete Abtasteinheit mit mehreren optischen Elementen vorgesehen. Über die Anordnung und Ausbildung der optischen Elemente der Abtasteinheit resultiert ein Abtaststrahlengang, in dem aufgespaltene und zur Interferenz gelangende Teilstrahlenbündel in Bezug auf eine Symmetrieebene spiegelsymmetrisch propagieren und entweder V-förmig auf den Maßstab einfallen und/oder eine V-förmige Rückreflexion vom Maßstab erfahren. Die Symmetrieebene ist um einen definierten Kippwinkel relativ zum Maßstab um eine Drehachse verkippt, welche parallel zur Oberfläche des Maßstabs orientiert ist und sich senkrecht zur Teilungsrichtung erstreckt. Es gelangen Teilstrahlenbündel zur Interferenz, die an der Messteilung in symmetrische Beugungsordnungen abgelenkt werden und aus den +.1 und -1. Beugungsordnungen an der Messteilung resultieren und wobei der Einfallswinkel eines auf die Messteilung einfallenden Strahlenbündels gegenüber der Symmetrieebene so gewählt ist, dass die Teilstrahlenbündel zwischen der Aufspaltung und der Wiedervereinigung identische optische Weglängen zurücklegen.

Hierbei kann die Messteilung als Reflexions-Phasengitter ausgebildet sein, welches auf eine hohe Beugungseffizienz der zur Signalerzeugung genutzten Beugungsordnungen optimiert ist.

Dabei kann die Abtasteinheit mindestens eine Abtastplatte mit mehreren optischen Elementen umfassen, wobei die Abtastplatte senkrecht zur Symmetrieebene angeordnet ist.

Ferner kann vorgesehen sein, dass der Einfallswinkel eines auf die Messteilung einfallenden Strahlenbündels gegenüber der Symmetrieebene gemäß

$$\gamma = \sin^{-1}\left(\sqrt{1 - \frac{k^2}{1 - \sin(\alpha)^2}} \cdot \sin(\alpha)\right) + \alpha$$

gewählt ist,
mit

    $\gamma$ := Einfallswinkel eines auf die Messteilung einfallenden Strahlenbündels gegenüber der Symmetrieebene
    $k := A / d_M$
    $\lambda$ := Lichtwellenlänge
    $d_M$ := Teilungsperiode der Messteilung
    $\alpha$ := Kippwinkel der Messteilung gegenüber der Symmetrieebene

Es ist auch möglich, dass eine in der Abtasteinheit angeordnete Abtastplatte transparent ausgebildet ist, wobei auf deren dem Maßstab zugewandten Seite zwei erste und zwei zweite Abtastgitter und auf der hierzu entgegengesetzten Seite zwei Reflektoren angeordnet sind und wobei die reflektierenden Flächen der Reflektoren in Richtung des Maßstabs orientiert sind.

Hierbei kann die Abtasteinheit dergestalt ausgebildet sein,

- dass ein von einer Lichtquelle emittiertes Strahlenbündel auf die Messteilung auftrifft, wo eine Aufspaltung in zwei V-förmig zur Abtasteinheit rückreflektierte Teilstrahlenbündel erfolgt, die zwei unterschiedlichen symmetrischen Beugungsordnungen entsprechen,
- die beiden rückreflektierten Teilstrahlenbündel in der Abtasteinheit die zwei ersten Abtastgitter in Richtung der zwei Reflektoren durchtreten und hierbei eine antiparallel zur Einfallsrichtung orientierte Ablenkwirkung sowie nur eine fokussierende Wirkung senkrecht zur Teilungsrichtung erfahren,
- die derart abgelenkten und fokussierten Teilstrahlenbündel dann jeweils auf den Reflektor treffen und eine Rückreflexion in Richtung des Maßstabs erfahren,
- die beiden rückreflektierten Teilstrahlenbündel dann die zwei zweiten Abtastgitter in Richtung des Maßstabs durchtreten und hierbei eine Ablenkwirkung in der Teilungsrichtung sowie nur eine kollimierende Wirkung senkrecht zur Teilungsrichtung erfahren, so dass die beiden Teilstrahlenbündel dann V-förmig in Richtung des Maßstabs propagieren,
- wo eine erneute Beugung und Rückreflexion überlagerter Teilstrahlenbündel in Richtung der Abtasteinheit resultiert.

Ferner kann dabei vorgesehen sein, dass die Teilungsperioden (d$_R$) aller Abtastgitter gemäß

$$d_R = d_M \cdot \cos \alpha$$

gewählt sind,
mit

d$_R$ := Teilungsperiode der Abtastgitter
d$_M$ := Teilungsperiode der Messteilung
$\alpha$ := Kippwinkel der Messteilung gegenüber der Symmetrieebene

Desweiteren ist hierbei möglich, dass auf derjenigen Seite der Abtastplatte, die dem Maßstab zugewandt ist, ferner ein Vereinigungsgitter angeordnet ist, auf das die vom Maßstab zurückreflektierten überlagerten Teilstrahlenbündel einfallen und über das eine Aufspaltung in mehrere Paare überlagerter Teilstrahlenbündel erfolgt, welche räumlich getrennt in Richtung einer Detektionseinheit propagieren, die mehrere Detektorelemente zur Erzeugung phasenverschobener Abtastsignale umfasst.
Mit Vorteil besitzen dabei die ersten und zweiten Abtastgitter unterschiedliche Teilungsperioden, so dass die Teilstrahlenbündel nach der zweiten Reflexion am Maßstab unter verschiedenen Winkeln auf das Vereinigungsgitter treffen.
Es ist auch möglich, dass eine in der Abtasteinheit angeordnete Abtastplatte transparent ausgebildet ist, wobei auf deren dem Maßstab zugewandten Seite ein erstes und ein zweites Abtastgitter und auf der hierzu entgegengesetzten Seite ein Vereinigungsgitter angeordnet ist,

- so dass ein von einer Lichtquelle emittiertes Strahlenbündel auf die Messteilung auftrifft, wo eine Aufspaltung in zwei V-förmig zur Abtasteinheit rückreflektierte Teilstrahlenbündel erfolgt, die zwei unterschiedlichen symmetrischen Beugungsordnungen entsprechen,
- die beiden rückreflektierten Teilstrahlenbündel in der Abtasteinheit das erste und zweite Abtastgitter durchtreten und in Richtung des Vereinigungsgitters propagieren,
- wobei am Vereinigungsgitter eine erneute Beugung resultiert und anschließend mehrere Paare überlagerter Teilstrahlenbündel in Richtung einer Detektionseinheit mit mehreren Detektorelementen propagieren.

Desweiteren kann die Abtasteinheit mindestens zwei Reflektoren sowie zwei Strahlteilerwürfel umfassen,

- so dass ein von einer Lichtquelle emittiertes Strahlenbündel auf die Messteilung auftrifft, wo eine Aufspaltung in zwei V-förmig zur Abtasteinheit rückreflektierte Teilstrahlenbündel erfolgt, die zwei unterschiedlichen symmetrischen Beugungsordnungen entsprechen,
- die beiden zurückreflektierten Teilstrahlenbündel über je einen Reflektor eine Umlenkung in Richtung des ersten Strahlteilerwürfels erfahren, wo sie nach Durchlaufen polarisationsoptischer Elemente eine Überlagerung erfahren und teilweise in Richtung eines Detektorelements sowie teilweise in Richtung des zweiten Strahlteilerwürfels weiterpropagieren und
- im zweiten Strahlteilerwürfel eine Aufspaltung in mindestens zwei weitere überlagerte Teilstrahlenbündel erfahren, die in Richtung weiterer Detektorelemente propagieren und
- und wobei die aufgespaltenen, überlagerten Teilstrahlenbündel vor dem Auftreffen auf die Detektorelemente jeweils weitere polarisationsoptische Elemente durchlaufen, so dass über die Detektorelemente jeweils phasenverschobene Abtastsignale erzeugbar sind.

Ferner ist möglich, dass die Abtasteinheit mindestens zwei Reflektoren sowie drei Strahlteilerwürfel umfasst, so dass ein von einer Lichtquelle emittiertes Strahlenbündel

- so dass ein von einer Lichtquelle emittiertes Strahlenbündel in einem ersten Strahlteilerwürfel eine Aufspaltung in zwei Teilstrahlenbündel erfährt,
- die beiden Teilstrahlenbündel dann über je einen Reflektor eine Umlenkung in Richtung der Messteilung erfahren, so dass diese V-förmig in Richtung Messteilung propagieren, wo sie jeweils eine Aufspaltung in symmetrische Beugungsordnungen erfahren, so dass kollinear überlagerte Teilstrahlenbündel in Richtung des zweiten Strahlteilerwürfels propagieren, wo sie nach Durchlaufen polarisationsoptischer Elemente eine Überlagerung erfahren und teilweise in Richtung eines Detektorelements sowie teilweise in Richtung des dritten Strahlteilerwürfels weiterpropagieren und

- im dritten Strahlteilerwürfel eine Aufspaltung in mindestens zwei weitere überlagerte Teilstrahlenbündel erfahren, die in Richtung weiterer Detektorelemente propagieren und

- und wobei die aufgespaltenen, überlagerten Teilstrahlenbündel vor dem Auftreffen auf die Detektorelemente jeweils weitere polarisationsoptische Elemente durchlaufen, so dass über die Detektorelemente jeweils phasenverschobene Abtastsignale erzeugbar sind.

Desweiteren kann vorgesehen sein, dass die Abtasteinheit mindestens zwei Reflektoren umfasst, über die zwei Teilstrahlenbündel eine Umlenkung in Richtung Maßstab erfahren und symmetrisch zur Symmetriebene sowie unter definierten Einfallswinkeln gegenüber der Symmetrieebene auf den Maßstab einfallen, wobei die Einfallswinkel gemäß

$$\beta_2 = -\beta_1 = \sin^{-1}\left(\frac{\lambda}{d_M \cdot cos(\alpha)}\right)$$

gewählt sind, mit:

$\beta_{1,2}$ := Einfallswinkel
$\lambda$ := Lichtwellenlänge
$d_M$ := Teilungsperiode der Messteilung
$\alpha$ := Kippwinkel der Messteilung gegenüber der Symmetrieebene

Die erfindungsgemäße optische Positionsmesseinrichtung liefert nunmehr für die Positionsmessung mit geneigtem Empfindlichkeitsvektor Signale mit hinreichender Signalintensität und Anbautoleranz. Außerdem ist die Messung weitgehend unempfindlich gegenüber Wellenlängenänderungen.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1a - 1c  jeweils eine schematisierte Schnittansicht eines ersten Ausführungsbeispiels der erfindungsgemäßen optischen Positionsmesseinrichtung mit geneigtem Empfindlichkeitsvektor;

Figur 2a - 2c  jeweils eine schematisierte Schnittansicht eines zweiten Ausführungsbeispiels der erfindungsgemäßen optischen Positionsmesseinrichtung mit geneigtem Empfindlichkeitsvektor;

Figur 3  eine schematisierte Schnittansicht eines dritten Ausführungsbeispiels der erfindungsgemäßen optischen Positionsmesseinrichtung mit geneigtem Empfindlichkeitsvektor;

Figur 4  eine schematisierte Schnittansicht eines vierten Ausführungsbeispiels der erfindungsgemäßen optischen Positionsmesseinrichtung mit geneigtem Empfindlichkeitsvektor;

Figur 5  eine schematisierte Schnittansicht eines fünften Ausführungsbeispiels der erfindungsgemäßen optischen Positionsmesseinrichtung mit geneigtem Empfindlichkeitsvektor.

## BESCHREIBUNG DER AUSFÜHRUNGSFORMEN

Bevor anhand der Figuren mehrere Ausführungsbeispiele der erfindungsgemäßen optischen Positionsmesseinrichtung im Detail beschrieben werden, seien nachfolgend zunächst einige Begrifflichkeiten im Zusammenhang mit der vorliegenden Erfindung erläutert.

Dazu sei noch einmal auf Abtastoptiken von Positionsmesseinrichtungen verwiesen, bei denen im Messbetrieb der Empfindlichkeitsvektor parallel zur Oberfläche des Maßstabs orientiert ist. In derartigen Abtastoptiken wird üblicherweise ein von einer Lichtquelle emittiertes Strahlenbündel in zwei Teilstrahlenbündel aufgespalten. Die beiden Teilstrahlenbündel werden an der Messteilung des Maßstabs in unterschiedliche Beugungsordnungen gebeugt und schließlich überlagert und zur Interferenz gebracht. Es lassen sich auf diese Art und Weise zueinander phasenverschobene Abtastsignale erzeugen, aus denen durch Inkrementalzählung und Interpolation Positionswerte gebildet werden. Einige solcher Abtastoptiken erzeugen Teilstrahlenbündel, die von der Aufspaltung bis zur Überlagerung spiegelsymmetrisch in Bezug auf eine Symmetrieebene verlaufen. Die Symmetrieebenen derartiger Abtaststrahlengänge stehen in dieser Betriebsart dabei senkrecht auf der Maßstabsoberfläche und damit auch senkrecht zur Teilungsrichtung der Messteilung des Maßstabs. Die Teilungsrichtung entspricht hierbei dem Gittervektor der Messteilung, der immer senkrecht zu den Gitterlinien der Messteilung orientiert ist; nachfolgend werden die Begriffe Teilungsrichtung und Gittervektor daher gleichwertig nebeneinander verwendet. Aufgrund der Spiegelsymmetrie des Abtaststrahlengangs resultieren gleichlange Propagationswege der Teilstrahlenbündel zwischen Aufspaltung und Wiedervereinigung. Die Abtastoptik ist damit achromatisch, d.h. die Wellenlänge der Lichtquelle sowie deren spektrale Verteilung haben keinen Einfluss auf die Phase und den Modulationsgrad der erzeugten Abtastsignale.

Abtastoptiken, in denen die zur Interferenz gelangenden Teilstrahlenbündel spiegelsymmetrisch in Bezug auf eine Symmetrieebene propagieren, können darüber hinaus auch so ausgebildet werden, dass der sogenannte neutrale Drehpunkt der Abtastung auf dem Maßstab liegt. Als neutraler Drehpunkt wird hierbei derjenige Punkt im Raum bezeichnet, um den entweder die Abtasteinheit oder der Maßstab gekippt werden kann, ohne dass sich der angezeigte Positionswert ändert. Die zurückgelegten Propagationswege der beiden Teilstrahlenbündel zwischen Aufspaltung und Wiedervereinigung bleiben bei einer Kippung um den neutralen Drehpunkt gleich. Derartige Abtastoptiken mit spiegelsymmetrischen Teilstrahlengängen und neutralem Drehpunkt auf dem Maßstab werden im Folgenden auch als symmetrisch-V-förmige Abtastoptiken bezeichnet. Diese Bezeichnung umschreibt somit all diejenigen Abtastoptiken, deren zur Interferenz gelangenden zwei Teilstrahlenbündel zum einen spiegelsymmetrisch in Bezug auf eine Symmetrieebene propagieren und zum anderen auf einen gemeinsamen Abtastort auf dem Maßstab V-förmig einfallen und/oder von ihm eine V-förmige Rückreflexion vom Maßstab erfahren. Dabei müssen nur die Auftrefforte beider Teilstrahlenbündel auf dem Maßstab entlang der Teilungsrichtung bzw. entlang des Gittervektors nahezu identisch sein, ein Versatz der Auftrefforte senkrecht zum Gittervektor bzw. entlang der Längsrichtung der strichförmigen Teilungsbereiche ist unerheblich.

Neben derartigen Abtastoptiken mit gleichen oder nahezu gleichen Auftrefforten der beiden Teilstrahlenbündel auf dem Maßstab entlang des Gittervektors gibt es weitere symmetrische Abtastoptiken, deren neutraler Drehpunkt auf dem Maßstab liegt. In der Europäischen Patentanmeldung EP 2 848 899 A2 der Anmelderin, auf deren Offenbarungsgehalt hiermit ausdrücklich Bezug genommen wird, findet sich eine allgemeine Beschreibung des Zusammenhangs zwischen einem beliebigen Strahlengang einer Abtastoptik und der zugehörigen Lage des neutralen Drehpunkts. Auf Grundlage dieser Beschreibung können weitere Abtastoptiken mit symmetrischem Strahlengang angegeben werden, deren neutraler Drehpunkt auf dem Maßstab liegt. Alle diese Abtastoptiken werden nachfolgend auch als symmetrisch-V-förmige Abtastoptiken bezeichnet.

Im Betrieb einer solchen symmetrisch-V-förmigen Abtastoptik mit parallelem Empfindlichkeitsvektor zur Maßstabsoberfläche wird die Abtasteinheit so zum Maßstab ausgerichtet, dass die oben erwähnte Symmetrieebene senkrecht zur Maßstabsoberfläche und auch senkrecht zum Gittervektor der Messteilung des Maßstabs steht. Dies wird als parallele Ausrichtung von Abtasteinheit und Maßstab bezeichnet.

In der vorliegenden Erfindung wird nunmehr analog zum vorgeschlagenen Vorgehen in der eingangs diskutierten DE 10 2015 203 188 A1 vorgesehen, eine solche symmetrisch-V-förmige Abtastoptik bzw. die zugehörige Symmetrieebene um einen bestimmten Kippwinkel $\alpha$ relativ zum Maßstab um eine Drehachse zu verkippen. Die Drehachse ist parallel zur Oberfläche des Maßstabs orientiert und erstreckt sich senkrecht zum Gittervektor der Messteilung des Maßstabs, d.h. parallel zur Längserstreckungsrichtung der Teilungsbereiche der Messteilung. Im Unterschied zur bekannten Positionsmesseinrichtung aus der DE 10 2015 203 188 A1, auf deren Offenbarungsgehalt hiermit ausdrücklich Bezug genommen wird, werden zur Signalerzeugung erfindungsgemäß jedoch keine zur Interferenz gelangenden Teilstrahlenbündel aus nicht-symmetrischen Beugungsordnungen herangezogen. Es ist vielmehr vorgesehen, Teilstrahlenbündel zur Interferenz gelangen zu lassen, die an der Messteilung in symmetrische Beugungsordnungen abgelenkt werden, vorzugsweise die an der Messteilung resultierenden +. 1. und -1. Beugungsordnungen. Dies kann dadurch erreicht werden, dass der Einfallswinkel $\gamma$ eines auf die Messteilung einfallenden Strahlenbündels gegenüber der Symmetrieebene geeignet gewählt wird. In anderen Worten: es ist eine schräge Beleuchtung vorzusehen. Als Nebenbedingung ist für den Einfallswinkel $\gamma$ in der erfindungsgemäßen Lösung ferner noch zu beachten, dass dieser so gewählt wird, dass zwischen Aufspaltung und Wiedervereinigung der Teilstrahlenbündel identische optische Weglängen der Teilstrahlenbündel resultieren. Auf diese Art und Weise kann auch die gewünschte Wellenlängenunabhängigkeit bzw. Achromasie der Positionsmessung gewährleistet werden.

Eine detaillierte Beschreibung dieser Zusammenhänge erfolgt im Anschluss anhand mehrerer Ausführungsbeispiele der erfindungsgemäßen optischen Positionsmesseinrichtung.

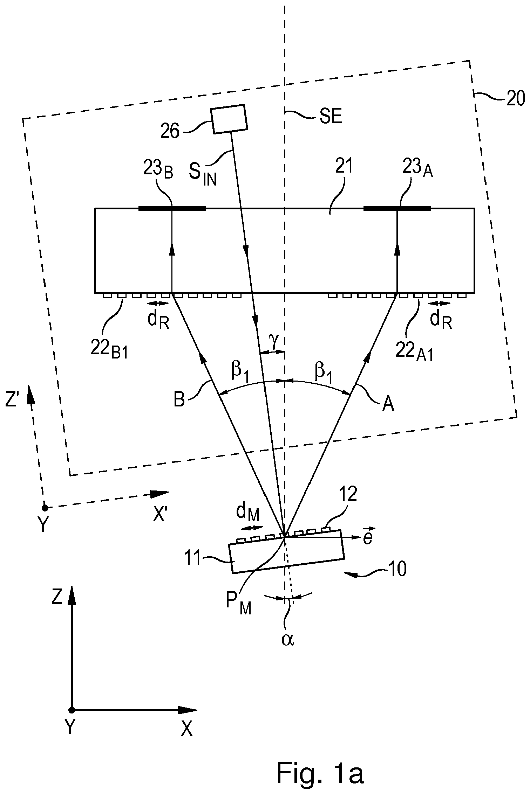

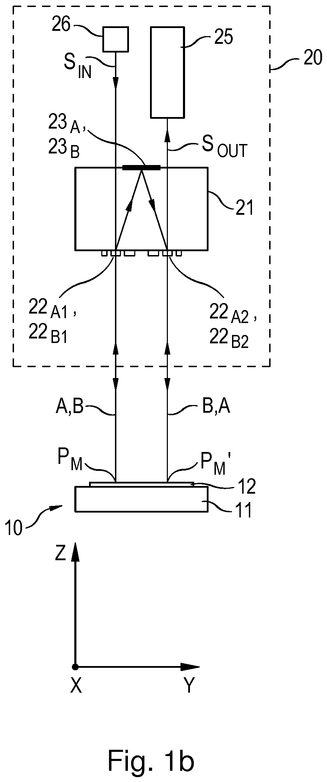

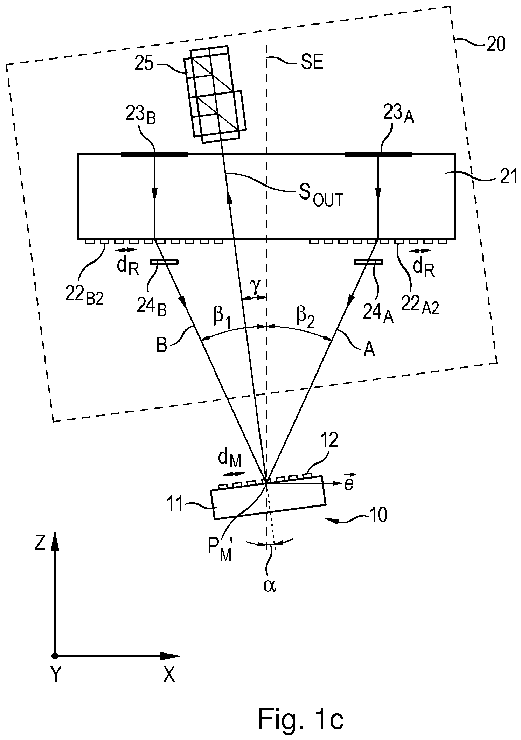

In den Figuren 1a, 1b und 1c ist der Abtaststrahlengang eines ersten Ausführungsbeispiels der erfindungsgemäßen optischen Positionsmesseinrichtung mit symmetrisch-V-förmiger Abtastoptik und einem gegenüber der Maßstabsoberfläche geneigtem Empfindlichkeitsvektor $\vec{e}$ in verschiedenen Ansichten gezeigt. In Figur 1a ist dabei in der xz-Ebene eine Ansicht des Strahlverlaufs des von einer Lichtquelle her einfallenden Strahlenbündels $S_{IN}$ bis zu den Reflektoren $23_A$, $23_B$ dargestellt. Figur 1c zeigt den Strahlverlauf in der gleichen Ebene von den Reflektoren $23_A$, $23_B$

bis zum austretenden Signalstrahlenbündel $S_{OUT}$ mit den überlagerten Teilstrahlenbündeln, die in Richtung einer Detektoreinheit 25 propagieren.

Figur 1b veranschaulicht den vollständigen Abtaststrahlengang in der yz-Ebene. Die Beschreibung erfolgt zunächst in einem Koordinatensystem x'yz', dessen Achsen mit x', y und z' bezeichnet seien. Mit x' ist in den Figuren jeweils die Teilungsrichtung bezeichnet, entlang der sich eine Messteilung 12 erstreckt. y bezeichnet die in der Messteilungsebene senkrecht hierzu orientierte Richtung; z' gibt eine Richtung an, die senkrecht zur Messteilungsebene orientiert ist.

Die in diesen Figuren dargestellte optische Positionsmesseinrichtung umfasst einen Maßstab 10, der sich entlang der Teilungsrichtung x' erstreckt, sowie eine Abtasteinheit 20, die mindestens entlang einer Richtung relativ beweglich zum Maßstab 10 angeordnet ist. Der Maßstab 10 und die Abtasteinheit 20 sind jeweils mit nicht in den Figuren dargestellten Objekten verbunden, beispielsweise mit relativ zueinander beweglichen Maschinenkomponenten. Mit Hilfe der über die Positionsmesseinrichtung erzeugten Abtastsignale kann eine nachgeordnete Maschinensteuerung die räumliche Positionierung dieser Maschinenkomponenten steuern.

Der Maßstab 10 besteht aus einem Teilungsträger 11, auf dessen Oberfläche eine Messteilung 12 angeordnet ist, die eine Anordnung von strichförmigen Teilungsbereichen entlang eines Gittervektors bzw. entlang der Teilungsrichtung x' umfasst; die Längserstreckungsrichtung der Teilungsbereiche entspricht in den Figuren der y-Richtung. Die Messteilung 12 ist im vorliegenden Ausführungsbeispiel als binäres bzw. zweistufiges Reflexions-Phasengitter mit der Teilungsperiode $d_M$ ausgebildet und sieht eine aufeinanderfolgende, periodische Anordnung von Teilungsbereichen mit unterschiedlichen phasenschiebenden Wirkungen für das darauf einfallende Licht vor. Das Reflexions-Phasengitter der Messteilung 12 ist auf eine hohe Beugungseffizienz der zur Signalerzeugung genutzten Beugungsordnungen optimiert, vorliegend also für die +1. und -1. Beugungsordnungen.

Auf Seiten der Abtasteinheit 20 sind verschiedene optische Elemente angeordnet. In den Figuren 1a - 1c sind dabei hiervon eine Lichtquelle 26, eine transparente Abtastplatte 21, auf deren Oberseite angeordnete Reflektoren $23_A$, $23_B$ bzw. auf deren Unterseite angeordnete erste Abtastgitter $22_{A1}$, $22_{B1}$ und zweite Abtastgitter $22_{A2}$, $22_{B2}$, polarisationsoptische Elemente $24_A$, $24_B$ sowie eine Detektionseinheit 25 dargestellt. Alternativ zum dargestellten Ausführungsbeispiel ist es auch möglich, die Lichtquelle 26 und die Detektionseinheit 25 räumlich entfernt von der Abtasteinheit 20 zu platzieren und mittels Lichtwellenleitern mit der Abtasteinheit 20 zu verbinden, über die das einfallende Strahlenbündel $S_{IN}$ bzw. das austretende Signalstrahlenbündel $S_{OUT}$ dann jeweils übertragen werden.

Über die Anordnung und Ausbildung der verschiedenen optischen Elemente in der Abtasteinheit 20 ist in der erfindungsgemäßen Positionsmesseinrichtung jeweils gewährleistet, dass ein Abtaststrahlengang resultiert, in dem zur Interferenz gelangende Teilstrahlenbündel A, B in Bezug auf eine Symmetrieebene SE spiegelsymmetrisch propagieren. Die Teilstrahlenbündel fallen dabei entweder V-förmig auf den Maßstab 10 ein und/oder erfahren eine V-förmige Rückreflexion vom Maßstab 10.

Wie insbesondere aus den Figuren 1a und 1c ersichtlich ist die Abtasteinheit 20 bzw. die Symmetrieebene SE um den Kippwinkel $\alpha$ relativ zum Maßstab 10 um eine Drehachse in y-Richtung verkippt angeordnet; entsprechend verkippt und damit senkrecht zur Symmetrieebene SE ist dann auch die in der Abtasteinheit 20 vorgesehene Abtastplatte 21 angeordnet. Der Kippwinkel $\alpha$ bezeichnet hierbei den Winkel zwischen einer Normalen auf den Maßstab entlang der z'-Richtung und der Symmetrieebene SE bzw. den Winkel der Messteilung 12 gegenüber der Symmetrieebene SE. Die entsprechende Drehachse in y-Richtung ist demzufolge parallel zur Oberfläche des Maßstabs 10 orientiert und erstreckt sich senkrecht zum in x'-Richtung orientierten Gittervektor der Messteilung 12. Die weitere Erläuterung erfolgt nunmehr in einem um den Kippwinkel $\alpha$ gedrehten Koordinatensystem xyz, bei dem anstelle der Abtastplatte 21 der Maßstab 10 um den Kippwinkel $\alpha$ verkippt ist.

Vorliegend ist im Unterschied zum bekannten System aus der DE 10 2015 203 188 A1 desweiteren ferner vorgesehen, dass das von der Lichtquelle 26 her einfallende Strahlenbündel $S_{IN}$ unter einem Einfallswinkel $\gamma$ gegenüber der Symmetrieebene SE einfällt. Nach dem unabgelenkten Durchlaufen der transparenten Abtastplatte 21 trifft das Strahlenbündel $S_{IN}$ dann am ersten Auftreffort $P_M$ erstmalig auf die Messteilung 12 des Maßstabs 10. An diesem Auftreffort $P_M$ resultiert eine Aufspaltung in zwei V-förmig zur Abtasteinheit 20 zurückreflektierte Teilstrahlenbündel A, B. Hierbei wird das einfallende Strahlenbündel $S_{IN}$ in die symmetrischen Beugungsordnungen $n_{A1} = +1$ und $n_{B1} = -1$ aufgespalten, die anschließend die zur Signalerzeugung genutzten Teilstrahlenbündel A, B darstellen.

Im Fall eines vorgegebenen Einfallswinkels $\gamma$ ergibt sich für die Beugungswinkel $\beta_{2,1}$ der beiden am Maßstab 10 bzw. der Messteilung 12 reflektierten ersten Beugungsordnungen ($n_{A1} = +1$, $n_{B1} = -1$) die nachfolgende Beziehung 1):

$$\beta_{2,1} = \sin^{-1}(\sin(\gamma - a) \pm k) - \alpha \qquad (\text{Gl. 1})$$

mit:

$\beta_1$ := Beugungswinkel der -1. Beugungsordnung am Maßstab

$\beta_2$ := Beugungswinkel der +1. Beugungsordnung am Maßstab

$\alpha$ := Kippwinkel der Messteilung gegenüber der Symmetrieebene

$\gamma$ := Einfallswinkel des einfallenden Strahlenbündel gegenüber der Symmetrieebene

$k := \lambda / d_M$

$\lambda$ := Lichtwellenlänge

$d_M$ := Teilungsperiode der Messteilung

Wie bereits vorstehend erwähnt, ist in der vorliegenden Erfindung gewährleistet, dass die Positionsmessung wellenlängenunabhängig ist. Hierzu wird sichergestellt, dass die interferierenden Teilstrahlenbündel A, B zwischen Aufspaltung und Wiedervereinigung identische optische Weglängen zurücklegen. Dies lässt sich gewährleisten, wenn der Einfallswinkel $\gamma$ des einfallenden Lichtbündels $S_{IN}$ gegenüber der Symmetrieebene SE geeignet gewählt wird. Unter Verwendung von Gleichung 1) und der Bedingung $\beta_1 = -\beta_2$ (Beugungswinkel betragsmäßig identisch) ergibt sich dabei für den Einfallswinkel $\gamma$:

$$\gamma = \sin^{-1}\left(\sqrt{1 - \frac{k^2}{1-\sin(\alpha)^2}} \cdot \sin(\alpha)\right) + \alpha \qquad \text{(Gl. 2)}$$

mit:

$\gamma$ := Einfallswinkel des einfallenden Strahlenbündel gegenüber der Symmetrieebene

$k := \lambda / d_M$

$\lambda$ := Lichtwellenlänge

$d_M$ := Teilungsperiode der Messteilung

$\alpha$ := Kippwinkel der Messteilung gegenüber der Symmetrieebene

Die an der Messteilung 12 gebeugten und zurückreflektierten Teilstrahlenbündel A, B propagieren dann jeweils zu ersten Abtastgittern $22_{A1}$ bzw. $22_{B1}$ auf der Unterseite der transparenten Abtastplatte 21 und durchtreten diese. Hierbei vereinen die beiden ersten Abtastgitter $22_{A1}$ bzw. $22_{B1}$ mehrere optische Funktionen in einer gemeinsamen diffraktiven Struktur.

Über die ersten Abtastgitter $22_{A1}$ bzw. $22_{B1}$ werden die Teilstrahlenbündel A, B in der xz-Projektion (Fig. 1a) dann jeweils wieder durch eine antiparallel zur Einfallsrichtung orientierte Ablenkwirkung in z-Richtung gelenkt. Die zur Erzielung dieser Ablenkwirkung erforderliche Teilungsperiode $d_R$ in den Abtastgittern $22_{A1}$ bzw. $22_{B1}$ ist jeweils vorzugsweise gemäß nachfolgender Beziehung 3) gewählt:

$$d_R = d_M \cdot \cos \alpha \qquad \text{(Gl. 3)}$$

mit:

$d_R$ := Teilungsperiode gemäß der Ablenkwirkung der Abtastgitter

$d_M$ := Teilungsperiode der Messteilung

$\alpha$ := Kippwinkel der Messteilung gegenüber der Symmetrieebene

In der yz-Projektion (Fig. 1b) werden die Teilstrahlenbündel A, B durch eine Zylinderlinsenfunktion der ersten Abtastgitter $22_{A1}$ bzw. $22_{B1}$ auf die Reflektoren $23_A$, $23_B$ auf der Oberseite der Abtastplatte 21 teilweise fokussiert, wobei lediglich senkrecht zur Richtung x, d.h. entlang der y-Richtung eine fokussierende Wirkung resultiert. Die derart abgelenkten und teilfokussierten Teilstrahlenbündel A, B treffen dann jeweils auf einen Reflektor $23_A$, $23_B$ und erfahren dort eine Rückreflexion in Richtung des Maßstabs 10. Nach der Reflexion an den Reflektoren $23_A$, $23_B$ durchtreten die beiden Teilstrahlenbündel A, B die beiden zweiten Abtastgitter $22_{A2}$, $22_{B2}$, welche ebenfalls auf der Unterseite der Abtastplatte 21 angeordnet sind. Die beiden zweiten Abtastgitter $22_{A2}$, $22_{B2}$ vereinen jeweils äquivalente optische Funktionen wie die beiden ersten Abtastgitter $22_{A1}$, $22_{B1}$. So rekollimieren sie die Teilstrahlenbündel A, B wieder durch eine Zylinderlinsenfunktion in der yz-Projektion (Fig. 1b) und lenken sie in der xz-Projektion (Fig. 1c) wieder zurück auf einen gemeinsamen Auftreffort $P_M'$ auf dem Maßstab 10 bzw. der Messteilung 12. Die beiden Teilstrahlenbündel A, B propagieren dabei V-förmig in Richtung des Maßstabs 10 bzw. in Richtung eines zweiten Auftrefforts $P_M'$. Dort werden sie durch erneute Beugung in symmetrischen Beugungsordnungen ($n_{A2} = +1$ und $n_{B2} = +1$) überlagert, zur Interferenz gebracht und propagieren dann im Signalstrahlenbündel $S_{OUT}$ in Richtung der Abtasteinheit 20 und der Detektionseinheit 25, wo mehrere periodische, phasenverschobene Abtastsignale aus dem Signalstrahlenbündel $S_{OUT}$ gewonnen werden.

Die Erzeugung der phasenverschobenen Abtastsignale erfolgt in diesem Ausführungsbeispiel mit Hilfe polarisationsoptische Elemente. Das von der Lichtquelle 26, beispielsweise ausgebildet als Laser, emittierte Strahlenbündel $S_{IN}$ besitzt eine lineare Polarisation. In den beiden Strahlengängen der aufgespaltenen Teilstrahlenbündel A, B bzw. in den entsprechenden Interferometerarmen befindet sich zwischen der Messteilung 12 und der Abtastplatte 21 jeweils eine $\lambda/4$ -Platte $24_A$, $24_B$, über die die jeweiligen Teilstrahlenbündel A, B rechts- bzw. linkszirkular polarisiert werden. Nach der Wiedervereinigung der Teilstrahlenbündel A, B am zweiten Auftreffort $P_M'$ erfolgt mit Hilfe eines Strahlteilers die Aufspaltung in drei Interferenzstrahlenbündel, welche dann über drei unterschiedlich orientierte Polarisatoren auf Detektorelemente gelangen, die schließlich die phasenverschobene Abtastsignale erzeugen. In den Figuren 1b, 1c ist hierbei mit dem Bezugszeichen 25 die Detektionseinheit bezeichnet, die den Strahlteiler, die Polarisatoren sowie die einzelnen Detektorelemente enthält und welche jeweils nicht im Detail in den Figuren gezeigt sind.

Der Empfindlichkeitsvektor $\vec{e}$ der Abtastung verläuft in der erfindungsgemäßen Positionsmesseinrichtung parallel zur Abtastplatte 21 bzw. geneigt zur Oberfläche des Maßstabs 10, wie dies aus den Figuren 1a, 1c ersichtlich ist. Es lassen sich auf diese Art und Weise positionsabhängige Abtastsignale sowohl für die Relativbewegung von Abtasteinheit 20 und Maßstab 10 entlang der Teilungsrichtung x' bzw. entlang des in x'-Richtung orientierten Gittervektors der Messteilung 12 als auch entlang der hierzu senkrechten Richtung z' erzeugen.

Wird die Abtasteinheit 20 dabei parallel zur Maßstaboberfläche bewegt, also in Richtung x', so beträgt die Signalperiode $SP_{x'}$ der Abtastsignale bzgl. dieser Messrichtung ein Viertel der Teilungsperiode $d_M$ des Messteilung 12, d.h.

$$SP_{x'} = \tfrac{1}{4} \cdot d_M \qquad \text{(Gl. 4)}$$

mit:

$SP_{x'}$ : Signalperiode der Abtastsignale bei Relativbewegung in x'-Richtung
$d_M$ := Teilungsperiode der Messteilung

Bei einer Bewegung der Abtasteinheit 20 entlang einer Normalen auf den Maßstab 10, also in Richtung z', ergibt sich die Signalperiode $SP_{z'}$ gemäß

$$SP_{z'} = \frac{d_M}{4 \cdot \tan(\alpha)} \qquad \text{(Gl. 5)}$$

$SP_{z'}$ : Signalperiode der Abtastsignale bei Relativbewegung in z'-Richtung
$d_M$ := Teilungsperiode der Messteilung
$\alpha$ := Kippwinkel der Messteilung gegenüber der Symmetrieebene

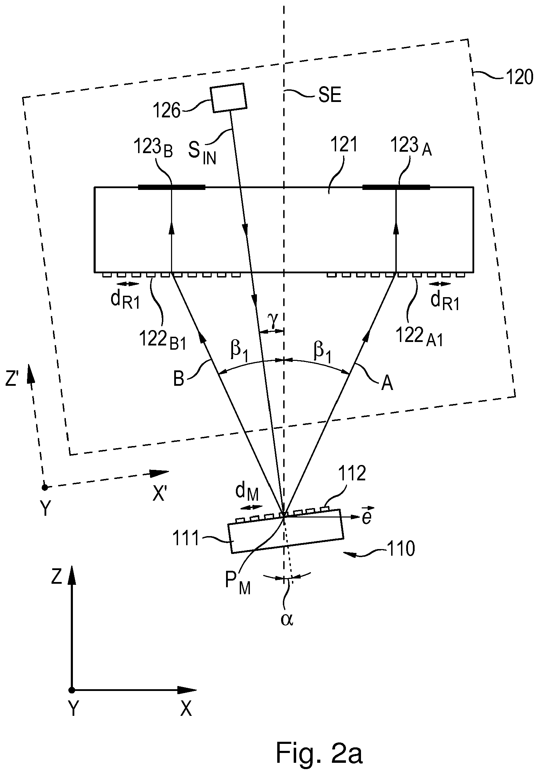

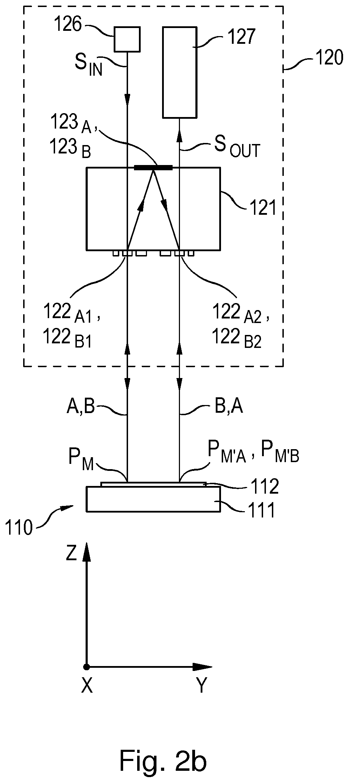

Ein zweites Ausführungsbeispiel der erfindungsgemäßen optischen Positionsmesseinrichtung wird im Gefolge anhand der Figuren 2a - 2c erläutert. Die Darstellung der verschiedenen Abschnitte des Abtaststrahlengangs in den verschiedenen Figuren erfolgt hierbei analog zur Darstellung im ersten Ausführungsbeispiel. Nachfolgend wird i.w. nur auf die wichtigsten Unterschiede zum ersten Ausführungsbeispiel eingegangen. Diese Unterschiede bestehen primär in der Art und Weise der Erzeugung der phasenverschobenen Abtastsignale. Hierbei ist nunmehr keine polarisationsoptische Erzeugung von Abtastsignalen vorgesehen, vielmehr wird hierzu ein Vereinigungsgitter 128 verwendet, das auf der Unterseite der Abtastplatte 121 angeordnet ist und dessen Teilungsperiode deutlich größer ist als die Teilungsperiode $d_M$ der Messteilung. Es entfallen damit gegenüber dem ersten Ausführungsbeispiel die dort im Abtaststrahlengang vorgesehenen polarisationsoptische Elemente wie $\lambda/4$ -Platten und Polarisatoren.

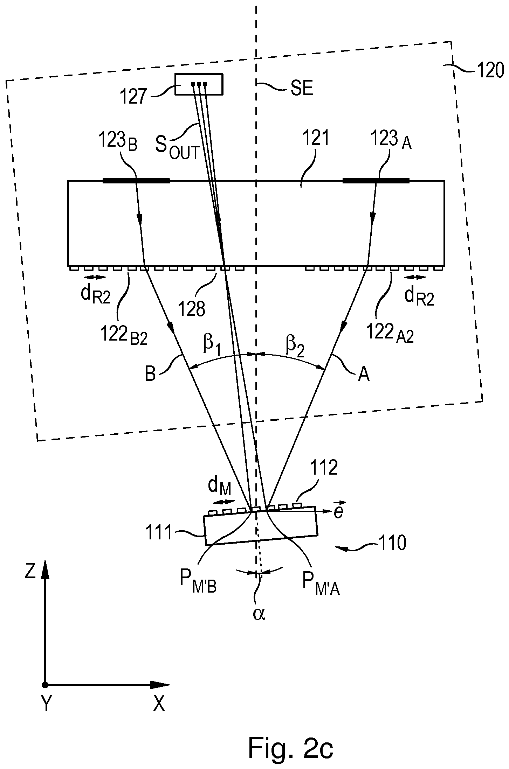

Der in Figur 2a gezeigte Teil-Abtaststrahlengang von der Lichtquelle 126 bis zu den Reflektoren $123_A$, $123_B$ entspricht nahezu identisch dem Abtaststrahlengang des ersten Ausführungsbeispiels aus Figur 1a. Lediglich die Ablenkfunktionen der ersten Abtastgitter $122_{A1}$ und $122_{B1}$ sind etwas schwächer bzw. stärker ausgebildet, so dass die Teilstrahlenbündel A, B in der Abtastplatte 121 - wie in Figur 2a dargestellt - etwas geneigt aber symmetrisch zur Symmetrieebene SE verlaufen. Nach der Rückreflexion über die Reflektoren $123_A$, $123_B$ gelangen die Teilstrahlenbündel A, B analog zum ersten Ausführungsbeispiel wie in Figur 2c gezeigt auf die zweiten Auftrefforte $P_{M'A}$ bzw. $P_{M'B}$ auf dem Maßstab 110; hierbei entfällt lediglich das Durchlaufen der $\lambda/4$ -Platten. Von den zweiten Auftrefforten $P_{M'A}$ bzw. $P_{M'B}$ auf dem Maßstab 110 erfolgt dann eine Rückreflexion der gebeugten Teilstrahlenbündel in Richtung des Vereinigungsgitters 128.

Als weiterer Unterschied zum ersten Ausführungsbeispiel ist vorliegend vorgesehen, dass die beiden zunächst durchlaufenen, ersten Abtastgitter $122_{A1}$, $122_{B1}$ auf der Unterseite der Abtastplatte 121 eine unterschiedliche Teilungsperiode $d_{R1}$ gegenüber der Teilungsperiode $d_{R2}$ der anschließend durchlaufenen zweiten Abtastgitter $122_{A2}$, $122_{B2}$ aufweisen. Auf diese Art und Weise wird sichergestellt, dass die Teilstrahlenbündel A, B nach der zweiten Reflexion am Maßstab 110 unter verschiedenen Winkeln auf den gleichen Ort des Vereinigungsgitters 128 treffen. Wird die Teilungsperiode des Vereinigungsgitters 128 so gewählt, dass die Richtung der +1. Beugungsordnung des einen Interferometerarms mit der Richtung der -1. Beugungsordnung des anderen Interferometerarms übereinstimmen, so interferieren die Teilstrahlenbündel A, B vollständig miteinander. Es weisen dann automatisch die 0. Beugungsordnung des einen Teilstrahlenbündels und die +2. Beugungsordnung des anderen Teilstrahlenbündels die selbe Richtung auf. Das Gleiche gilt auch für die -2. Beugungsordnung des einen Interferometerarms und die 0. Beugungsordnung des anderen Interferometerarms. Auf diese Art und Weise resultieren nach dem Vereinigungsgitter 128 insgesamt drei Strahlenbündel mit zueinander phasenverschobenen Abtastsignalen im Signalstrahlenbündel $S_{OUT}$, wobei jeweils Teilstrahlenbündel unterschiedlicher Beugungsordnung überlagert werden. Mit Hilfe dreier Detektorelemente in der Detektionseinheit 127 werden die Abtastsignale in elektrische Signale umgewandelt und in bekannter Weise so verschaltet, dass ausgangsseitig zwei gleichanteilfreie, jeweils um 90° phasenverschobene Abtastsignale vorliegen.

Die exakte Symmetrie der beiden Teilstrahlenbündel A, B wird in diesem Ausführungsbeispiel im letzten Abschnitt zwischen Maßstab 110 und Vereinigungsgitter 128 verletzt. Dadurch weisen die beiden Teilstrahlenbündel A, B nur annähernd gleiche optische Wegstrecken auf, wodurch die gewünschte Achromasie der Positionsmesseinrichtung nur näherungsweise erfüllt wird. Die Achromasie der Positionsmesseinrichtung kann zumindest für einen bestimmten Abstand zwischen Maßstab 110 und Abtastplatte 121 wieder hergestellt werden, wenn der Abstand durch eine definierte Asymmetrie zwischen den Teilstrahlbündeln A, B vorkompensiert wird. Dies kann z.B. dadurch implementiert werden, dass die Gitterkonstanten $d_{R1A}$ und $d_{R1B}$ und folglich ebenfalls dR2A und dR2B jeweils verschieden voneinander dimensioniert werden. Dadurch resultieren für die beiden Teilstrahlenbündel A, B innerhalb der Abtastplatte 121 unterschiedliche Winkel und somit unterschiedliche Weglängen.

In einer Abwandlung des zweiten Ausführungsbeispiels kann auch vorgesehen werden, anstelle des Vereinigungsgitters 128 einen sogenannten strukturierten Photodetektor im Abtaststrahlengang anzuordnen und das in dieser Ebene resultierende Streifenmuster zu erfassen. Der strukturierte Photodetektor besteht aus einer periodischen Anordnung von Detektorelementen entlang der Messrichtung x und erlaubt in bekannter Art und Weise die Erzeugung dreier oder vierer phasenverschobener Abtastsignale. Als Detektionseinheit würde in diesem Fall dann der strukturierte Photodetektor fungieren.

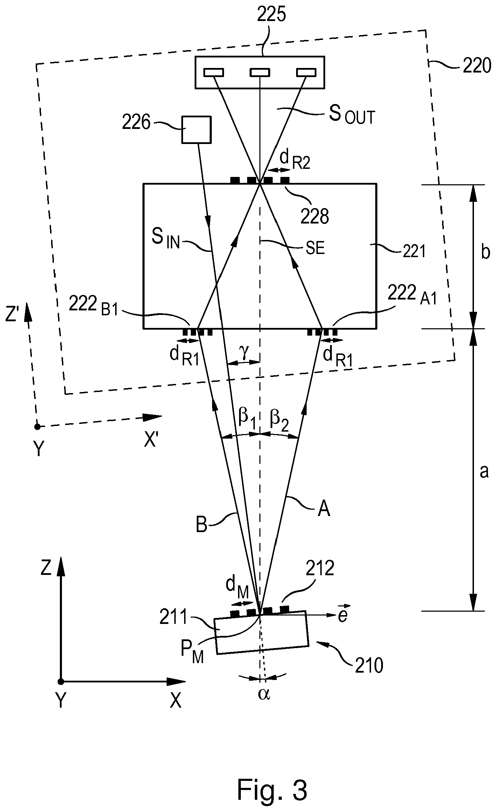

Eine schematisierte Schnittansicht der xz-Ebene eines dritten Ausführungsbeispiels der erfindungsgemäßen optischen Positionsmesseinrichtung mit geneigtem Empfindlichkeitsvektor $\vec{e}$ ist in Figur 3 gezeigt. Nachfolgend werden ebenso wie in den nachfolgenden Beispielen nur die wichtigsten Unterschiede zu den vorhergehenden Ausführungsbeispielen erläutert.

Neben dem Wegfall polarisationsoptischer Komponenten ist hier nunmehr nur eine einfache Abtastung des Maßstabs 210 vorgesehen, d.h. das von der Lichtquelle 226 her schräg einfallende Strahlenbündel $S_{IN}$ trifft nur einmal am Auftreffort $P_M$ auf die Messteilung 212 bzw. den Maßstab 210.

Bei einer vorgesehenen Verkippung des Empfindlichkeitsvektors $\vec{e}$ um den Kippwinkel $\alpha$ wird die gewünschte Achromasie der Abtastoptik erreicht, wenn die beiden Einfallswinkel $\beta_1$ und $\beta_2$ der vom Maßstab 210 zurückreflektierten Teilstrahlenbündel A, B, auf die Abtastplatte 221 betragsmäßig identisch sind. Entsprechend kann der Einfallswinkel $\gamma$ für das Strahlenbündel $S_{IN}$ gegenüber der Symmetrieebene SE durch die obige Gleichung 2) bestimmt werden.

Die beiden vom Maßstab gebeugten und in Richtung Abtasteinheit 220 zurückreflektierten Teilstrahlenbündel A, B werden durch die Abtastgitter $222_{A1}$, $222_{B1}$ in Richtung der Symmetrieebene SE zurückgelenkt und treffen sich am Vereinigungsgitter 228, das auf der Oberseite der Abtastplatte 221 angeordnet ist. Die Teilungsperiode $d_{R2}$ des Vereinigungsgitters 228 wird dabei vorzugsweise folgendermaßen gewählt:

$$d_{R2} = d_M \bullet \cos\alpha \frac{\sqrt{b^2+(a^2-b^2)\left(\frac{\lambda}{d_M \bullet \cos\alpha}\right)^2}}{a \bullet n_r} \qquad (\text{Gl. 6})$$

mit:

$d_{R2}$ := Teilungsperiode des Vereinigungsgitters
$d_M$ := Teilungsperiode der Messteilung
$\alpha$ := Kippwinkel der Messteilung gegenüber der Symmetrieebene
a := Abstand zwischen Messteilung und Abtastgittern
b := Abstand zwischen Abtastgittern und Vereinigungsgitter

$\lambda$ := Lichtwellenlänge

$n_r$ := Brechungsindex des Mediums zwischen den Abtastgittern und dem Vereinigungsgitter

Unter Verwendung der Gleichung 6) ergibt sich die Periodizität bzw. Teilungsperiode $d_{R1}$ der beiden Abtastgitter $222_{A1}$, $222_{B1}$ in diesem Ausführungsbeispiel folgendermaßen:

$$d_{R1} = \left( \frac{1}{d_M \bullet \cos\alpha} + \frac{1}{d_{R2}} \right)^{-1} \qquad \text{(Gl. 7)}$$

mit:

$d_{R1}$ := Teilungsperiode der Abtastgitter
$d_M$ := Teilungsperiode der Messteilung
$\alpha$ := Kippwinkel der Messteilung gegenüber der Symmetrieebene
$d_{R2}$ := Teilungsperiode des Vereinigungsgitters

Nach der Wiedervereinigung der Teilstrahlenbündel A, B am Vereinigungsgitter 228 propagieren überlagerte Paare von Teilstrahlenbündeln im Signalstrahlenbündel $S_{OUT}$ dann in Richtung der Detektionseinheit 225, wo mit Hilfe mehrerer Detektorelemente die phasenverschobenen Abtastsignale erzeugt werden.

Wie aus Figur 3 ersichtlich, verläuft der Empfindlichkeitsvektor $\vec{e}$ der Abtastung in diesem Ausführungsbeispiel parallel zur Abtastplatte 221 sowie geneigt zum Maßstab 210; damit ist die Erzeugung positionsabhängiger Signale sowohl entlang der x'-Richtung wie auch entlang der z'-Richtung möglich.

Wird die Abtasteinheit 220 parallel zur Maßstabsoberfläche, also in Richtung x' bewegt, dann resultiert eine Signalperiode SPx' der Abtastsignale, die einer halben Teilungsperiode $d_M$ der Messteilung entspricht:

$$SP_{x'} = \frac{1}{2} \bullet d_M \qquad \text{(Gl. 8)}$$

mit:

$SP_{x'}$ : Signalperiode der Abtastsignale bei Relativbewegung in x'-Richtung
$d_M$ := Teilungsperiode der Messteilung

Bei einer Bewegung der Abtasteinheit 220 entlang der Normalen auf den Maßstab 210, also in Richtung z', beträgt die Signalperiode der Abtastsignale

$$SP_{z'} = \frac{d_M}{2 \cdot \tan(\alpha)} \qquad \text{(Gl. 9)}$$

mit:

$SP_{z'}$ := Signalperiode der Abtastsignale bei Relativbewegung in z'-Richtung
$d_M$ := Teilungsperiode der Messteilung
$\alpha$ := Kippwinkel der Messteilung gegenüber der Symmetrieebene

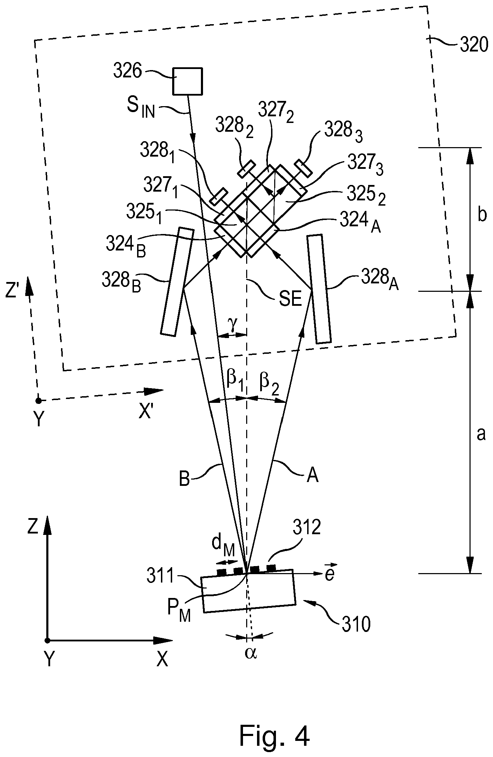

Eine schematisierte Schnittansicht der xz-Ebene eines vierten Ausführungsbeispiels der erfindungsgemäßen optischen Positionsmesseinrichtung mit geneigtem Empfindlichkeitsvektor $\vec{e}$ ist in Figur 4 gezeigt.

Das unter dem Einfallswinkel $\gamma$ zur Symmetrieebene SE einfallende Strahlenbündel $S_{IN}$, das von einer als Laser ausgebildeten Lichtquelle 326 emittiert wird, besitzt eine lineare Polarisation. Es trifft am Auftreffort $P_M$ auf die Messteilung 312 des Maßstabs 310 und wird dort in die +1 und -1. Beugungsordnung reflektierend gebeugt. Nachfolgend treffen die beiden aufgespaltenen Teilstrahlenbündel A, B jeweils auf Reflektoren $328_A$, $328_B$, die als Planspiegel ausgebildet sind und werden darüber in Richtung eines ersten Strahlteilerwürfels $325_1$ umgelenkt. Vor dem Erreichen des ersten Strahltei-lerwürfels $325_1$ durchlaufen die Teilstrahlenbündel A, B dabei jeweils noch $\lambda$/4-Platten $324_A$, $324_B$ und werden darüber links- bzw. rechtszirkular polarisiert. Im ersten Strahlteilerwürfel $325_1$ werden die Teilstrahlenbündel A, B überlagert und propagieren dann teilweise in Richtung eines Detektorelements $328_1$ und teilweise in Richtung eines zweiten Strahltei-lerwürfels $325_2$. Im zweiten Strahlteilerwürfel $325_2$ erfolgt dann eine nochmalige Aufspaltung in zwei weitere Teilstrahlenbündel-Paare. Die derart erzeugten drei Teilstrahlbündel-Paare passieren dann schließlich noch drei Polarisatoren $327_1$ - $327_3$, die an den beiden Strahlteilerwürfeln $325_1$, $325_2$ wie aus Figur 4 ersichtlich angeordnet sind bevor sie auf drei Detektorelemente $328_1$ - $328_3$ gelangen. Diese erzeugen dann drei phasenverschobene Abtastsignale, deren Phasenverschiebung zueinander durch die Orientierung der Polarisatoren $327_1$ - $327_3$ auf jeweils 120° eingestellt ist.

Auch in diesem Ausführungsbeispiel ist die Positionsmessung achromatisch, da die zurückgelegten optischen Weglängen der Teilstrahlenbündel A, B zwischen Aufspaltung und Wiedervereinigung gleich lang sind. Dies wird hier dadurch sichergestellt, dass der Strahlengang der beiden Teilstrahlenbündel A, B vom Maßstab 310 bis zum ersten Strahlteilerwürfel $325_1$ symmetrisch zur optischen Achse bzw. Symmetrieebene SE ist. Der Einfallswinkel $\gamma$ wird wieder gemäß obiger Gleichung 2) gewählt. Die beiden Reflektoren $328_A$ und $328_B$ sind symmetrisch in Bezug auf die Symmetrieebene SE angeordnet.

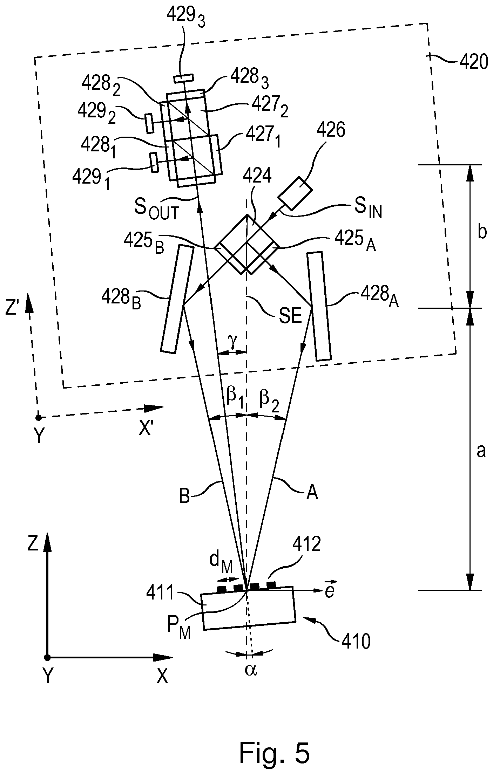

Ein fünftes Ausführungsbeispiel der erfindungsgemäßen optischen Positionsmesseinrichtung mit geneigtem Empfindlichkeitsvektor $\vec{e}$ wird abschließend anhand der schematisierten Schnittansicht von Figur 5 erläutert, die den Abtaststrahlengang in der xz-Ebene zeigt.

Das fünfte Ausführungsbeispiel ist im wesentlichen analog zum vierten Ausführungsbeispiel aufgebaut. Der maßgebliche Unterschied besteht in der grundsätzlich umgekehrten Strahlrichtung im Abtaststrahlengang. So wird im fünften Ausführungsbeispiel das von einer Lichtquelle 426 emittierte Strahlbündel $S_{IN}$ über einen Strahlteilerwürfel 424 in zwei Teilstrahlenbündel A, B aufgeteilt, die mit Hilfe zweier $\lambda/4$-Platten $425_A$, $425_B$ eine rechts- und links-zirkulare Polarisation erfahren. Die beiden Teilstrahlenbündel A, B werden dann über die Reflektoren $428_A$, $428_B$ zum Maßstab 410 umgelenkt, wo sie auf dem Auftreffpunkt $P_M$ auf die Messteilung 412 auftreffen. Der Strahlengang der beiden Teilstrahlenbündel A, B zwischen dem Strahlteilerwürfel 424 und dem Maßstab 410 ist symmetrisch zur optischen Achse bzw. zur Symmetrieebene SE und damit achromatisch. Die Beleuchtungs- bzw. Einfallswinkel $\beta_2$ bzw. $\beta_1$ sind in diesem Fall gemäß

$$\beta_2 = -\beta_1 = \sin^{-1}\left(\frac{\lambda}{d_M \cdot cos(\alpha)}\right) \qquad \text{(Gl. 10)}$$

zu wählen, wobei

$\beta_{1,2}$ := Einfallswinkel
$\lambda$ := Lichtwellenlänge
$d_M$ := Teilungsperiode der Messteilung
$\alpha$ := Kippwinkel der Messteilung gegenüber der Symmetrieebene

Am Maßstab 410 bzw. der dort angeordneten Messteilung 412 werden die Teilstrahlenbündel A, B reflektierend in die +1. bzw. -1. Beugungsordnung abgelenkt und dabei kollinear überlagert. Die überlagerten Teilstrahlenbündel gelangen auf die beiden weiteren Strahlteilerwürfel $427_1$, $427_2$, wo sie in drei überlagerte Teilstrahlenbündel aufgespalten werden. Analog zum vorhergehenden Ausführungsbeispiel werden sie über Polarisatoren $428_1$ - $428_3$ auf drei Detektorelemente $429_1$ - $429_3$ gelenkt, wo drei um 120° phasenversetzte Abtastsignale resultieren.

Neben den erläuterten Ausführungsbeispielen gibt es im Rahmen der vorliegenden Erfindung selbstverständlich noch weitere Ausgestaltungsmöglichkeiten.

So ist es natürlich möglich, anstelle der oben beschriebenen Positionsmesseinrichtungen zur Erfassung von Linearbewegungen auch Positionsmesseinrichtungen zur Erfassung rotatorischer Bewegungen erfindungsgemäß auszubilden. Die entsprechenden Messteilungen sind dann als Radialteilungen oder als Trommelteilungen ausgebildet.

Als Messteilungen können desweiteren auch zweidimensionale Strukturen in Form von sog. Kreuzgitterteilungen in der erfindungsgemäßen Positionsmesseinrichtung zum Einsatz kommen.

Aufgrund der Achromasie der erfindungsgemäßen Abtastung ist ferner möglich, als Lichtquellen anstelle von Laserdioden auch LEDs oder SLEDs einzusetzen.

**Patentansprüche**

1. Optische Positionsmesseinrichtung zur Erfassung der Position von zwei relativ zueinander beweglichen Objekten mit

    - einem Maßstab (10; 110; 210; 310; 410), der mit einem der beiden Objekte verbunden ist und eine Messteilung (12; 112; 212; 312; 412) mit einer periodischen Anordnung von Teilungsbereichen entlang mindestens einer Teilungsrichtung (x) umfasst sowie
    - einer am anderen Objekt angeordneten Abtasteinheit (20; 120; 220; 320; 420) mit mehreren optischen Elementen, wobei über die Anordnung und Ausbildung der optischen Elemente der Abtasteinheit (20; 120; 220; 320; 420) ein Abtaststrahlengang resultiert, in dem aufgespaltene und zur Interferenz gelangende Teilstrahlenbündel (A, B) in Bezug auf eine Symmetrieebene (SE) spiegelsymmetrisch propagieren und entweder V-förmig auf den Maßstab (10; 110; 210; 310; 410) einfallen und/oder eine V-förmige Rückreflexion vom Maßstab (10; 110; 210; 310; 410) erfahren, wobei die Symmetrieebene (SE) um einen definierten Kippwinkel ($\alpha$) relativ zum Maßstab (10; 110; 210; 310; 410) um eine Drehachse verkippt ist, welche parallel zur Oberfläche des Maßstabs (10; 110; 210; 310; 410) orientiert ist und sich senkrecht zur Teilungsrichtung erstreckt,

**dadurch gekennzeichnet,**

- **dass** der Einfallswinkel (y) eines auf die Messteilung (12; 112; 212; 312; 412) einfallenden Strahlenbündels ($S_{IN}$) gegenüber der Symmetrieebene (SE) so gewählt ist, dass die Teilstrahlenbündel (A, B) zwischen der Aufspaltung und der Wiedervereinigung identische optische Weglängen zurücklegen und dass Teilstrahlenbündel (A, B) zur Interferenz gelangen, die an der Messteilung (12; 112; 212; 312; 412) in symmetrische Beugungsordnungen abgelenkt werden und aus den +1. und -1. Beugungsordnungen an der Messteilung (12; 112; 212; 312; 412) resultieren.

2. Optische Positionsmesseinrichtung nach Anspruch 1, **dadurch gekennzeichnet, dass** die Messteilung (12; 112; 212; 312; 412) als Reflexions-Phasengitter ausgebildet ist, welches auf eine hohe Beugungseffizienz der zur Signalerzeugung genutzten Beugungsordnungen optimiert ist.

3. Optische Positionsmesseinrichtung nach Anspruch 1, **dadurch gekennzeichnet, dass** die Abtasteinheit mindestens eine Abtastplatte mit mehreren optischen Elementen umfasst, wobei die Abtastplatte senkrecht zur Symmetrieebene angeordnet ist.

4. Optische Positionsmesseinrichtung nach Anspruch 1, **dadurch gekennzeichnet, dass** der Einfallswinkel ($\gamma$) eines auf die Messteilung (12) einfallenden Strahlenbündels ($S_{IN}$) gegenüber der Symmetrieebene (SE) gemäß

$$\gamma = \sin^{-1}\left(\sqrt{1 - \frac{k^2}{1 - \sin(\alpha)^2} \cdot \sin(\alpha)}\right) + \alpha$$

gewählt ist,
mit

$\gamma$ := Einfallswinkel eines auf die Messteilung einfallenden Strahlenbündels gegenüber der Symmetrieebene
$k := \lambda/d_M$
$\lambda$ := Lichtwellenlänge
$d_M$ := Teilungsperiode der Messteilung
$\alpha$ := Kippwinkel der Messteilung gegenüber der Symmetrieebene

5. Optische Positionsmesseinrichtung nach mindestens einem der vorhergehenden Ansprüche, **dadurch gekennzeichnet, dass** eine in der Abtasteinheit (20; 120) angeordnete Abtastplatte (21; 121) transparent ausgebildet ist, wobei auf deren dem Maßstab (10; 110) zugewandten Seite zwei erste und zwei zweite Abtastgitter ($22_{A1}$, $22_{A2}$, $22_{B1}$, $22_{B2}$; $122_{A1}$, $122_{A2}$, $122_{B1}$, $122_{B2}$) und auf der hierzu entgegengesetzten Seite zwei Reflektoren angeordnet ($23_A$, $23_B$; 23A, $23_B$;) sind, wobei die reflektierenden Flächen der Reflektoren ($23_A$, $23_B$; $23_A$, $23_B$) in Richtung des Maßstabs (10; 110) orientiert sind.

6. Optische Positionsmesseinrichtung nach Anspruch 5, **dadurch gekennzeichnet, dass** die Abtasteinheit (20; 120) dergestalt ausgebildet ist,

- dass ein von einer Lichtquelle (26; 126) emittiertes Strahlenbündel ($S_{IN}$) auf die Messteilung (12; 112) auftrifft, wo eine Aufspaltung in zwei V-förmig zur Abtasteinheit (20; 120) rückreflektierte Teilstrahlenbündel (A, B) erfolgt, die zwei unterschiedlichen symmetrischen Beugungsordnungen entsprechen,
- die beiden rückreflektierten Teilstrahlenbündel (A, B) in der Abtasteinheit (20; 120) die zwei ersten Abtastgitter ($22_{A1}$, $22_{B1}$, $122_{A1}$, $122_{B1}$) in Richtung der zwei Reflektoren ($23_A$, $23_B$; $23_A$, $23_B$) durchtreten und hierbei eine antiparallel zur Einfallsrichtung orientierte Ablenkwirkung sowie nur eine fokussierende Wirkung senkrecht zur Teilungsrichtung (x) erfahren,

- die derart abgelenkten und fokussierten Teilstrahlenbündel (A, B) dann jeweils auf den Reflektor ($23_A$, $23_B$; $23_A$, $23_B$) treffen und eine Rückreflexion in Richtung des Maßstabs (10; 110) erfahren,

- die beiden rückreflektierten Teilstrahlenbündel (A, B) dann die zwei zweiten Abtastgitter ($22_{A2}$, $22_{B2}$, $122_{A2}$, $122_{B2}$) in Richtung des Maßstabs (10; 110) durchtreten und hierbei eine Ablenkwirkung in der Teilungsrichtung (x) sowie nur eine kollimierende Wirkung senkrecht zur Teilungsrichtung (x) erfahren, so dass die beiden Teilstrahlenbündel (A, B) dann V-förmig in Richtung des Maßstabs (10; 110) propagieren,

- wo eine erneute Beugung und Rückreflexion überlagerter Teilstrahlenbündel (A, B) in Richtung der Abtasteinheit (20; 120) resultiert.

7. Optische Positionsmesseinrichtung nach Anspruch 5, **dadurch gekennzeichnet, dass** die Teilungsperioden ($d_R$) aller Abtastgitter ($22_{A1}$, $22_{A2}$, $22_{B1}$, $22_{B2}$; $122_{A1}$, $122_{A2}$, $122_{B1}$, $122_{B2}$;) gemäß

$$d_R = d_M \bullet \cos \alpha$$

gewählt sind,
mit

    $d_R$ := Teilungsperiode der Abtastgitter
    $d_M$ := Teilungsperiode der Messteilung
    $\alpha$ := Kippwinkel der Messteilung gegenüber der Symmetrieebene

8. Optische Positionsmesseinrichtung nach Anspruch 6, **dadurch gekennzeichnet, dass** auf derjenigen Seite der Abtastplatte (121), die dem Maßstab (110) zugewandt ist, ferner ein Vereinigungsgitter (128) angeordnet ist, auf das die vom Maßstab (110) zurückreflektierten überlagerten Teilstrahlenbündel (A, B) einfallen und über das eine Aufspaltung in mehrere Paare überlagerter Teilstrahlenbündel (A, B) erfolgt, welche räumlich getrennt in Richtung einer Detektionseinheit (127) propagieren, die mehrere Detektorelemente zur Erzeugung phasenverschobener Abtastsignale umfasst.

9. Optische Positionsmesseinrichtung nach Anspruch 8, **dadurch gekennzeichnet, dass** die ersten und zweiten Abtastgitter ($122_{A1}$, $122_{A2}$, $122_{B1}$, $122_{B2}$) unterschiedliche Teilungsperioden ($d_{R1}$, $d_{R2}$) besitzen, so dass die Teilstrahlenbündel (A, B) nach der zweiten Reflexion am Maßstab (110) unter verschiedenen Winkeln auf das Vereinigungsgitter (128) treffen.

10. Optische Positionsmesseinrichtung nach Anspruch 1, **dadurch gekennzeichnet, dass** eine in der Abtasteinheit (220) angeordnete Abtastplatte (221) transparent ausgebildet ist, wobei auf deren dem Maßstab (210) zugewandten Seite ein erstes und ein zweites Abtastgitter ($222_{A1}$, $222_{B1}$) und auf der hierzu entgegengesetzten Seite ein Vereinigungsgitter (228) angeordnet ist,

    - so dass ein von einer Lichtquelle (226) emittiertes Strahlenbündel ($S_{IN}$) auf die Messteilung (212) auftrifft, wo eine Aufspaltung in zwei V-förmig zur Abtasteinheit (220) rückreflektierte Teilstrahlenbündel (A, B) erfolgt, die zwei unterschiedlichen symmetrischen Beugungsordnungen entsprechen,
    - die beiden rückreflektierten Teilstrahlenbündel (A, B) in der Abtasteinheit (220) das erste und zweite Abtastgitter ($222_{A1}$, $222_{B1}$) durchtreten und in Richtung des Vereinigungsgitters (228) propagieren,
    - wobei am Vereinigungsgitter (228) eine erneute Beugung resultiert und anschließend mehrere Paare überlagerter Teilstrahlenbündel (A, B) in Richtung einer Detektionseinheit (225) mit mehreren Detektorelementen propagieren.

11. Optische Positionsmesseinrichtung nach Anspruch 1, **dadurch gekennzeichnet, dass** die Abtasteinheit (320) mindestens zwei Reflektoren ($328_A$, $328_B$) sowie zwei Strahlteilerwürfel ($325_1$, $325_2$) umfasst,

    - so dass ein von einer Lichtquelle (326) emittiertes Strahlenbündel ($S_{IN}$) auf die Messteilung (312) auftrifft, wo eine Aufspaltung in zwei V-förmig zur Abtasteinheit (320) rückreflektierte Teilstrahlenbündel (A, B) erfolgt, die zwei unterschiedlichen symmetrischen Beugungsordnungen entsprechen,
    - die beiden zurückreflektierten Teilstrahlenbündel (A, B) über je einen Reflektor ($328_A$, $328_B$) eine Umlenkung in Richtung des ersten Strahlteilerwürfels ($325_1$) erfahren, wo sie nach Durchlaufen polarisationsoptischer Elemente ($324_A$, $324_B$) eine Überlagerung erfahren und teilweise in Richtung eines Detektorelements ($328_1$) sowie teilweise in Richtung des zweiten Strahlteilerwürfels ($325_2$) weiterpropagieren und

- im zweiten Strahlteilerwürfel ($325_2$) eine Aufspaltung in mindestens zwei weitere überlagerte Teilstrahlenbündel (A, B) erfahren, die in Richtung weiterer Detektorelemente ($328_2$, $328_3$) propagieren und
- und wobei die aufgespaltenen, überlagerten Teilstrahlenbündel (A, B) vor dem Auftreffen auf die Detektorelemente ($328_1$, $328_2$, $328_3$) jeweils weitere polarisationsoptische Elemente ($327_1$, $327_2$, $327_3$) durchlaufen, so dass über die Detektorelemente ($328_1$, $328_2$, $328_3$) jeweils phasenverschobene Abtastsignale erzeugbar sind.

12. Optische Positionsmesseinrichtung nach Anspruch 1, **dadurch gekennzeichnet, dass** die Abtasteinheit (420) mindestens zwei Reflektoren ($428_A$, $428_B$) sowie drei Strahlteilerwürfel (424, $427_1$, $427_2$) umfasst,

- so dass ein von einer Lichtquelle (426) emittiertes Strahlenbündel ($S_{IN}$) in einem ersten Strahlteilerwürfel (424) eine Aufspaltung in zwei Teilstrahlenbündel (A, B) erfährt,
- die beiden Teilstrahlenbündel (A, B) dann über je einen Reflektor ($428_A$, $428_B$) eine Umlenkung in Richtung der Messteilung (412) erfahren, so dass diese V-förmig in Richtung Messteilung (412) propagieren, wo sie jeweils eine Aufspaltung in symmetrische Beugungsordnungen erfahren, so dass kollinear überlagerte Teilstrahlenbündel (A, B) in Richtung des zweiten Strahlteilerwürfels ($427_1$) propagieren, wo sie nach Durchlaufen polarisationsoptischer Elemente ($425_A$, $425_B$) eine Überlagerung erfahren und teilweise in Richtung eines Detektorelements ($429_1$) sowie teilweise in Richtung des dritten Strahlteilerwürfels ($427_2$) weiterpropagieren und
- im dritten Strahlteilerwürfel ($427_2$) eine Aufspaltung in mindestens zwei weitere überlagerte Teilstrahlenbündel (A, B) erfahren, die in Richtung weiterer Detektorelemente ($429_2$, $429_3$) propagieren und
- und wobei die aufgespaltenen, überlagerten Teilstrahlenbündel (A, B) vor dem Auftreffen auf die Detektorelemente ($429_1$, $429_2$, $429_3$) jeweils weitere polarisationsoptische Elemente ($428_1$, $428_2$, $428_3$) durchlaufen, so dass über die Detektorelemente ($429_1$, $429_2$, $429_3$) jeweils phasenverschobene Abtastsignale erzeugbar sind.

13. Optische Positionsmesseinrichtung nach Anspruch 1, **dadurch gekennzeichnet, dass** die Abtasteinheit (420) mindestens zwei Reflektoren ($428_A$, $428_B$) umfasst, über die zwei Teilstrahlenbündel (A, B) eine Umlenkung in Richtung Maßstab (410) erfahren und symmetrisch zur Symmetriebene (SE) sowie unter definierten Einfallswinkeln ($\beta_1$, $\beta_2$) gegenüber der Symmetrieebene (SE) auf den Maßstab (410) einfallen, wobei die Einfallswinkel ($\beta_1$, $\beta_2$) gemäß

$$\beta_2 = -\beta_1 = \sin^{-1}\left(\frac{\lambda}{d_M \cdot \cos(\alpha)}\right)$$

gewählt sind, mit:

$\beta_{1,2}$ := Einfallswinkel
$\lambda$ := Lichtwellenlänge
$d_M$ := Teilungsperiode der Messteilung
$\alpha$ := Kippwinkel der Messteilung gegenüber der Symmetrieebene

## Claims

1. Optical position measuring device for capturing the position of two objects that are movable relative to one another, comprising

- a scale (10; 110; 210; 310; 410) which is connected to one of the two objects and which comprises a measurement graduation (12; 112; 212; 312; 412) with a periodic arrangement of graduation regions along at least one graduation direction (x) and
- a scanning unit (20; 120; 220; 320; 420) with a plurality of optical elements which is disposed on the other object, wherein a scanning beam path arises by way of the arrangement and embodiment of the optical elements of the scanning unit (20; 120; 220; 320; 420), split partial beams (A, B) which are made to interfere propagate in said scanning beam path in mirror-symmetric fashion in relation to a plane of symmetry (SE) and said split partial beams either are incident on the scale (10; 110; 210; 310; 410) in V-shaped fashion or experience a V-shaped back-reflection from the scale (10; 110; 210; 310; 410), wherein the plane of symmetry (SE) is tilted by a defined tilt angle ($\alpha$) relative to the scale (10; 110; 210; 310; 400) about an axis of rotation, which is oriented parallel to the surface of the scale (10; 110; 210; 310; 410) and which extends perpendicular to the graduation direction,

**characterized**
**in that** the angle of incidence ($\gamma$) of a beam ($S_{IN}$) incident on the measurement graduation (12; 112; 212; 312; 412) is chosen in relation to the plane of symmetry (SE) in such a way that the partial beams (A, B) have identical optical path lengths between split and combining and in that partial beams (A, B) which are deflected at the measurement graduation (12; 112; 212; 312; 112) to symmetric orders of diffraction and which result from the +1st and -1st orders of diffraction at the measurement graduation (12; 112; 212; 312; 412) are made to interfere.

2. Optical position measuring device according to Claim 1, **characterized in that** the measurement graduation (12; 112; 212; 312; 412) is embodied as a reflection phase grating which is optimized for a high diffraction efficiency of the orders of diffraction used for the signal generation.

3. Optical position measuring device according to Claim 1, **characterized in that** the scanning unit comprises at least one scanning plate with a plurality of optical elements, the scanning plate being disposed perpendicular to the plane of symmetry.

4. Optical position measuring device according to Claim 1, **characterized in that** the angle of incidence (y) of a beam ($S_{IN}$) incident on the measurement graduation (12) is chosen in relation to the plane of symmetry (SE) according to

$$\gamma = \sin^{-1}\left(\sqrt{1 - \frac{k^2}{1 - \sin(\alpha)^2} \cdot \sin(\alpha)}\right) + \alpha$$

where

$\gamma$ := angle of incidence of the beam incident on the measurement graduation in relation to the plane of symmetry,
k := $\lambda/d_M$,
$\lambda$ := light wavelength,
$d_M$ := graduation period of the measurement graduation and
$\alpha$ := tilt angle of the measurement graduation in relation to the plane of symmetry.

5. Optical position measuring device according to at least one of the preceding claims, **characterized in that** the scanning plate (21; 121) disposed in the scanning unit (20; 120) has a transparent embodiment, wherein two first and second scanning gratings ($22_{A1}$, $22_{A2}$, $22_{B1}$, $22_{B2}$; $122_{A1}$, $122_{A2}$, $122_{B1}$, $122_{B2}$) are disposed on the side facing the scale (10; 110) and two reflectors ($23_A$, $23_B$; $23_A$, $23_B$) are disposed on the side opposite thereto, wherein the reflecting faces .of the reflectors ($23_A$, $23_B$; $23_A$, $23_B$) are oriented in the direction of the scale (10; 110).

6. Optical position measuring device according to Claim 5, **characterized in that** the scanning unit (20; 120) is embodied in such a way

- that a beam ($S_{IN}$) emitted by a light source (26; 126) is incident on the measurement graduation (12; 112), wherein there is a split into two partial beams (A, B), which are reflected back to the scanning unit (20; 120) in V-shaped fashion and which correspond to two different symmetric orders of diffraction,
- the two back-reflected partial beams (A, B) pass through the two first scanning gratings ($22_{A1}$, $22_{B1}$; $122_{A1}$, $122_{B1}$) in the scanning unit (20; 120) in the direction of the two reflectors ($23_A$, $23_B$; $23_A$, $23_B$) and, in the process, experience a deflection effect oriented antiparallel to the direction of incidence and only a focusing effect perpendicular to the graduation direction (x),
- the partial beams (A, B) deflected and focused thus are then each incident on the reflector ($23_A$, $23_B$; $23_A$, $23_B$) and each experience a back-reflection in the direction of the scale (10; 110),
- the two back-reflected partial beams (A, B) then pass through the two second scanning gratings ($22_{A2}$, $22_{B2}$; $122_{A2}$, $122_{B2}$) in the direction of the scale (10; 110) and, in the process, experience a deflection effect in the graduation direction (x) and only a collimating effect perpendicular to the graduation direction (x) such that the two partial beams (A, B) then propagate in V-shaped fashion in the direction of the scale (10; 110),
- where there is a renewed diffraction and back-reflection of overlaid partial beams (A, B) in the direction of the scanning unit (20; 120).

**7.** Optical position measuring device according to Claim 5, **characterized in that** the graduation periods ($d_R$) of all scanning gratings ($22_{A1}$, $22_{A2}$, $22_{B1}$, $22_{B2}$; $122_{A1}$, $122_{A2}$, $122_{B1}$, $122_{B2}$) are chosen according to

$$d_R = d_M \cdot \cos \alpha$$

where:

$d_R$ := graduation period of the scanning grating,
$d_M$ := graduation period of the measurement graduation, and
$\alpha$ := tilt angle of the measurement graduation in relation to the plane of symmetry.

**8.** Optical position measuring device according to Claim 6, **characterized in that** a combining grating (128) is further disposed on the side of the scanning plate (121) facing the scale (110), the overlaid partial beams (A, B) reflected back from the scale (110) are incident on said combining grating and the latter implements splitting into a plurality of pairs of overlaid partial beams (A, B), which propagate with spatial separation in the direction of a detection unit (127) which comprises a plurality of detector elements for generating phase-shifted scanning signals.

**9.** Optical position measuring device according to Claim 8, **characterized in that** the first and second scanning gratings ($122_{A1}$, $122_{A2}$, $122_{B1}$, $122_{B2}$) have different graduation periods ($d_{R1}$, $d_{R2}$) such that partial beams (A, B) are incident on the combining grating (128) at different angles following the second reflection of the scale (110).

**10.** Optical position measuring device according to Claim 1, **characterized in that** a scanning plate (221) disposed in the scanning unit (220) has a transparent embodiment, wherein a first and a second scanning grating ($222_{A1}$, $222_{B1}$) are disposed on its side facing the scale (210) and a combining grating (228) is disposed on the side opposite thereto,

- and so a beam ($S_{IN}$) emitted by a light source (226) is incident on the measurement graduation (212), where there is a split into two partial beams (A, B) which are reflected back to the scanning unit (220) in V-shaped fashion, said partial beams corresponding to two different symmetric orders of diffraction,
- the two back-reflected partial beams (A, B) pass through the first and the second scanning grating ($222_{A1}$, $222_{B1}$) in the scanning unit (220) and propagate in the direction of the combining grating (228),
- wherein there is renewed diffraction at the combining grating (228) and subsequently a plurality of pairs of overlaid partial beams (A, B) propagate in the direction of the detection unit (225) with a plurality of detector elements.

**11.** Optical position measuring device according to Claim 1, **characterized in that** the scanning unit (320) comprises at least two reflectors ($328_A$, $328_B$) and two beam splitter cubes ($325_1$, $325_2$),

- and so a beam ($S_{IN}$) emitted by a light source (326) is incident on the measurement graduation (312), where there is a split into two partial beams (A, B) which are reflected back to the scanning unit (320) in V-shaped fashion, said partial beams corresponding to two different symmetric orders of diffraction,
- the two back-reflected partial beams (A, B) experience a deflection in the direction of the first beam splitter cube ($325_1$) via a reflector ($328_A$, $328_B$) in each case, said partial beams experiencing an overlay in said beam splitter cube after passing through polarization-optical elements ($324_A$, $324_B$) and in part propagating onwards in the direction of a detector element ($328_1$) and in part propagating onwards in the direction of the second beams splitter cube ($325_2$) and
- experiencing a split into at least two further overlaid partial beams (A, B) in the second beam splitter cube ($325_2$), said further overlaid partial beams propagating in the direction of further detector elements ($328_2$, $328_3$) and
- wherein the split, overlaid partial beams (A, B) each pass through further polarization-optical elements ($327_1$, $327_2$, $327_3$) before the incidence at the detector elements ($328_1$, $328_2$, $328_3$) such that respective phase-shifted scanning signals are able to be generated by way of the detector elements ($328_1$, $328_2$, $328_3$).

**12.** Optical position measuring device according to Claim **1, characterized in that** the scanning unit (420) comprises at least two reflectors ($420_A$, $420_B$) and three beam splitter cubes ($424$, $427_1$, $427_2$),

- and so a beam ($S_{IN}$) emitted by a light source (426) experiences a split into two partial beams (A, B) in a first beam splitter cube (424),

- the two partial beams (A, B) then experience a deflection in the direction of the measurement graduation (412), respectively by way of a reflector ($428_A$, $428_B$), such that these propagate in V-shaped fashion in the direction of the measurement graduation (412) where they each experience a split into symmetric orders of diffraction such that partial beams (A, B) which are overlaid in collinear fashion propagate in the direction of the second beam splitter cube ($427_1$), where they experience overlay after passing through polarization-optical elements ($425_A$, $425_B$) and in part propagate onwards in the direction of a detection element ($429_1$) and in part propagate onwards in the direction of the third beam splitter cube ($427_2$) and

- they experience a split into at least two further overlaid partial beams (A, B) in the third beam splitter cube ($427_2$), said further overlaid partial beams propagating in the direction of further detector elements ($429_2$, $429_3$), and

- wherein the split, overlaid partial beams (A, B) each pass through further polarization-optical elements ($428_1$, $428_2$, $428_3$) before the incidence at the detector elements ($429_1$, $429_2$, $429_3$) such that respective phase-shifted scanning signals are able to be generated by way of the detector elements ($429_1$, $429_2$, $429_3$).

**13.** Optical position measuring device according to Claim 1, **characterized in that** the scanning unit (420) comprises at least two reflectors (428A, 428B), by means of which the two partial beams (A, B) experience a deflection the direction of the scale (420) and are incident on the scale (410) in symmetric fashion with respect to the plane of symmetry (SE) and at defined angles of incidence ($\beta_1$, $\beta_2$) in relation to the plane of symmetry (SE), wherein the angles of incidence ($\beta_1$, $\beta_2$) are chosen according to

$$\beta_2 = -\beta_1 = \sin^{-1}\left(\frac{\lambda}{d_M \cdot \cos(\alpha)}\right)$$

where:

$\beta_{1,2}$ := angles of incidence,
$\lambda$ := light wavelength,
$d_M$ := graduation period of the measurement graduation and
$\alpha$ := tilt angle of the measurement graduation in relation to the plane of symmetry.

**Revendications**

**1.** Dispositif de mesure de position optique destiné à détecter la position de deux objets mobiles l'un par rapport à l'autre, comprenant

- une règle graduée (10 ; 110 ; 210 ; 310 ; 410), qui est reliée à l'un des deux objets et comporte une graduation de mesure (12 ; 112 ; 212 ; 312 ; 412) avec un arrangement périodique de zones de graduation le long d'au moins une direction de graduation (x) et
- une unité de balayage (20 ; 120 ; 220 ; 320 ; 420) comprenant plusieurs éléments optiques disposée au niveau de l'autre objet, l'arrangement et la configuration des éléments optiques de l'unité de balayage (20 ; 120 ; 220 ; 320 ; 420) résultant en un trajet de rayon de balayage dans lequel des faisceaux de rayons partiels (A, B) dédoublés et devenant des interférences se propagent avec une symétrie en miroir en référence à un plan de symétrie (SE) et soit sont incidents en forme de V sur la règle graduée (10 ; 110 ; 210 ; 310 ; 410) et/ou subissent une rétroréflexion en forme de V par la règle graduée (10 ; 110 ; 210 ; 310 ; 410), le plan de symétrie (SE) étant désaligné d'un angle de désalignement ($\alpha$) défini par rapport à la règle graduée (10 ; 110 ; 210 ; 310 ; 410) autour d'un axe de rotation qui est orienté parallèlement à la surface de la règle graduée (10 ; 110 ; 210 ; 310 ; 410) et s'étend perpendiculairement à la direction de graduation,

**caractérisé en ce**

- **que** l'angle d'incidence (y) d'un faisceau de rayons ($S_{IN}$) incident sur la graduation de mesure (12 ; 112 ; 212 ; 312 ; 412) par rapport au plan de symétrie (SE) est choisi de telle sorte que les faisceaux de rayons partiels (A, B) parcourent des longueurs de chemin optiques identiques entre le dédoublement et la reconvergence et en ce que les faisceaux de rayons partiels (A, B) deviennent des interférences qui sont déviées au niveau de la graduation de mesure (12 ; 112 ; 212 ; 312 ; 412) dans des ordres de diffraction symétriques et résultent des +1e et -1e ordres de diffraction au niveau de la graduation de mesure (12 ; 112 ; 212 ; 312 ; 412).

**2.** Dispositif de mesure de position optique selon la revendication 1, **caractérisé en ce que** la graduation de mesure (12 ; 112 ; 212 ; 312 ; 412) est réalisée sous la forme d'un réseau de phase à réflexion qui est optimisé sur une efficacité de diffraction élevée des ordres de diffraction utilisés pour la génération de signal.

**3.** Dispositif de mesure de position optique selon la revendication 1, **caractérisé en ce que** l'unité de balayage comporte au moins une plaque de balayage pourvue de plusieurs éléments optiques, la plaque de balayage étant disposée perpendiculairement au plan de symétrie.

**4.** Dispositif de mesure de position optique selon la revendication 1, **caractérisé en ce que** l'angle d'incidence (y) d'un faisceau de rayons ($S_{IN}$) incident sur la graduation de mesure (12) par rapport au plan de symétrie (SE) est choisi selon

$$\gamma = sin^{-1}\left(\sqrt{1 - \frac{k^2}{1 - sin(\alpha)^2} \cdot sin(\alpha)}\right) + \alpha$$

où

$\gamma$ = angle d'incidence d'un faisceau de rayons incident sur la graduation de mesure par rapport au plan de symétrie

$$k = \lambda/d_M$$

$\lambda$ = longueur d'onde lumineuse
$d_M$ = période de graduation de la graduation de mesure
$\alpha$ = angle de désalignement de la graduation de mesure par rapport au plan de symétrie.

**5.** Dispositif de mesure de position optique selon au moins l'une des revendications précédentes, **caractérisé en ce qu'**une plaque de balayage (21 ; 121) disposée dans l'unité de balayage (20 ; 120) est de configuration transparente, deux premiers et deux deuxièmes réseaux de balayage ($22_{A1}$, $22_{A2}$, $22_{B1}$, $22_{B2}$ ; $122_{A1}$, $122_{A2}$, $122_{B1}$, $122_{B2}$) étant disposés sur son côté qui fait face à la règle graduée (10 ; 110) et deux réflecteurs ($23_A$, $23_B$ ; $23_A$, $23_B$) sur son côté qui y est opposé, les surfaces réfléchissantes des réflecteurs ($23_A$, $23_B$ ; $23_A$, $23_B$) étant orientées en direction de la règle graduée (10 ; 110).

**6.** Dispositif de mesure de position optique selon la revendication 5, **caractérisé en ce que** l'unité de balayage (20 ; 120) est configurée de telle sorte

- qu'un faisceau de rayons ($S_{IN}$) émis par une source de lumière (26 ; 126) vient frapper la graduation de mesure (12 ; 112), où il se produit un dédoublement en deux faisceaux de rayons partiels (A, B) rétroréfléchis en forme de V vers l'unité de balayage (20 ; 120), lesquels correspondent à deux ordres de diffraction symétriques différents,
- les deux faisceaux de rayons partiels (A, B) rétroréfléchis traversent, dans l'unité de balayage (20 ; 120), les deux premiers réseaux de balayage ($22_{A1}$, $22_{B1}$ ; $122_{A1}$, $122_{B1}$) en direction des deux réflecteurs ($23_A$, $23_B$ ; $23_A$, $23_B$) et subissent à cette occasion un effet de déviation orienté en tête-bêche par rapport à la direction d'incidence ainsi qu'uniquement un effet de focalisation perpendiculairement à la direction de graduation (x),
- les faisceaux de rayons partiels (A, B) ainsi déviés et focalisés viennent alors respectivement frapper le réflecteur ($23_A$, $23_B$ ; $23_A$, $23_B$) et subissent une rétroréflexion en direction de la règle graduée (10 ; 110),
- les deux faisceaux de rayons partiels (A, B) rétroréfléchis traversent alors les deux deuxièmes réseaux de balayage ($22_{A2}$, $22_{B2}$ ; $122_{A2}$, $122_{B2}$) en direction de la règle graduée (10 ; 110) et subissent à cette occasion un effet de déviation dans la direction de graduation (x) ainsi qu'uniquement un effet de collimation perpendiculairement à la direction de graduation (x), de sorte que les deux faisceaux de rayons partiels (A, B) se propagent alors en forme de V en direction de la règle graduée (10 ; 110),
- ce qui résulte en une nouvelle diffraction et une nouvelle rétroréflexion des faisceaux de rayons partiels (A, B) en direction de l'unité de balayage (20 ; 120).

**7.** Dispositif de mesure de position optique selon la revendication 5, **caractérisé en ce que** la période de graduation ($d_R$) de tous les réseaux de balayage ($22_{A1}$, $22_{A2}$, $22_{B1}$, $22_{B2}$ ; $122_{A1}$, $122_{A2}$, $122_{B1}$, $122_{B2}$) est choisie selon

$$d_R = d_M * \cos \alpha$$

où

$d_R$ = période de graduation du réseau de balayage

$d_M$ = période de graduation de la graduation de mesure

$\alpha$ = angle de désalignement de la graduation de mesure par rapport au plan de symétrie.

8. Dispositif de mesure de position optique selon la revendication 6, **caractérisé en ce que** sur chaque côté de la plaque de balayage (121) qui fait face à la règle graduée (110) est en plus disposé un réseau de convergence (128) sur lequel sont incidents les faisceaux de rayons partiels (A, B) superposés rétroréfléchis par la règle graduée (110) et par le biais duquel est effectué un dédoublement en plusieurs paires de faisceaux de rayons partiels (A, B) superposés qui se propagent séparés dans l'espace en direction d'une unité de détection (127), laquelle comporte plusieurs éléments détecteurs destinés à générer des signaux de balayage déphasés.

9. Dispositif de mesure de position optique selon la revendication 8, **caractérisé en ce que** les premiers et deuxièmes réseaux de balayage ($122_{A1}$, $122_{A2}$, $122_{B1}$, $122_{B2}$) possèdent des périodes de graduation ($d_{R1}$, $d_{R2}$) différentes, de sorte que les faisceaux de rayons partiels (A, B), après la deuxième réflexion sur la règle graduée (110), viennent frapper le réseau de convergence (128) sous des angles différents.

10. Dispositif de mesure de position optique selon la revendication 1, **caractérisé en ce qu'**une plaque de balayage (221) disposée dans l'unité de balayage (220) est de configuration transparente, un premier et un deuxième réseau de balayage ($222_{A1}$, $222_{B1}$) étant disposés sur son côté qui fait face à la règle graduée (210) et un réseau de convergence (228) sur son côté qui y est opposé,

- de sorte qu'un faisceau de rayons ($S_{IN}$) émis par une source de lumière (226) vient frapper la graduation de mesure (212), où il se produit un dédoublement en deux faisceaux de rayons partiels (A, B) rétroréfléchis en forme de V vers l'unité de balayage (220), lesquels correspondent à deux ordres de diffraction symétriques différents,
- les deux faisceaux de rayons partiels (A, B) rétroréfléchis traversent, dans l'unité de balayage (220), le premier et le deuxième réseau de balayage ($222_{A1}$, $222_{B1}$) et se propagent en direction du réseau de convergence (228),
- une nouvelle diffraction résultant au niveau du réseau de convergence (228) et ensuite plusieurs paires de faisceaux de rayons partiels (A, B) superposés se propageant ensuite en direction d'une unité de détection (225) comprenant plusieurs éléments détecteurs.

11. Dispositif de mesure de position optique selon la revendication 1, **caractérisé en ce que** l'unité de balayage (320) comporte au moins deux réflecteurs ($328_A$, $328_B$) ainsi que deux cubes séparateurs de rayons ($325_1$, $325_2$),

- de sorte qu'un faisceau de rayons ($S_{IN}$) émis par une source de lumière (326) vient frapper la graduation de mesure (312), où il se produit un dédoublement en deux faisceaux de rayons partiels (A, B) rétroréfléchis en forme de V vers l'unité de balayage (320), lesquels correspondent à deux ordres de diffraction symétriques différents,
- les deux faisceaux de rayons partiels (A, B) rétroréfléchis subissent, respectivement par un réflecteur ($328_A$, $328_B$), un renvoi en direction du premier cube séparateur de rayons ($325_1$) où, après être passés à travers des éléments optiques de polarisation ($324_A$, $324_B$), ils subissent une superposition et poursuivent leur propagation partiellement en direction d'un élément détecteur ($328_1$) ainsi que partiellement en direction du deuxième cube séparateur de rayons ($325_2$), et
- dans le deuxième cube séparateur de rayons ($325_2$), ils subissent un dédoublement en au moins deux faisceaux de rayons partiels (A, B) superposés supplémentaires qui se propagent en direction d'éléments détecteurs supplémentaires ($328_2$, $328_3$) et
- les faisceaux de rayons partiels (A, B) dédoublés superposés, avant de venir frapper les éléments détecteurs ($328_1$, $328_2$, $328_3$), passant respectivement à travers des éléments optiques de polarisation supplémentaires ($327_1$, $327_2$, $327_3$), de sorte que des signaux de balayage respectivement déphasés peuvent être générés par le biais des éléments détecteurs ($328_1$, $328_2$, $328_3$).

12. Dispositif de mesure de position optique selon la revendication 1, **caractérisé en ce que** l'unité de balayage (420) comporte au moins deux réflecteurs ($428_A$, $428_B$) ainsi que trois cubes séparateurs de rayons (424, $427_1$, $427_2$),

- de sorte qu'un faisceau de rayons ($S_{IN}$) émis par une source de lumière (426) subit un dédoublement en deux faisceaux de rayons partiels (A, B) dans un premier cube séparateur de rayons (424),
- les deux faisceaux de rayons partiels (A, B) subissent alors, respectivement par un réflecteur ($428_A$, $428_B$), un renvoi en direction de la graduation de mesure (412), de sorte que ceux-ci se propagent en forme de V en direction de la graduation de mesure (412), où ils subissent respectivement un dédoublement en ordres de diffraction symétriques, de sorte que les faisceaux de rayons partiels (A, B) superposés de manière colinéaire se propagent en direction du deuxième cube séparateur de rayons ($427_1$) où, après être passés à travers des éléments optiques de polarisation ($425_A$, $425_B$), ils subissent une superposition et poursuivent leur propagation partiellement en direction d'un élément détecteur ($429_1$) ainsi que partiellement en direction du troisième cube séparateur de rayons ($427_2$) et
- dans le troisième cube séparateur de rayons ($427_2$), ils subissent un dédoublement en au moins deux faisceaux de rayons partiels (A, B) superposés supplémentaires qui se propagent en direction d'éléments détecteurs supplémentaires ($429_2$, $429_3$) et
- les faisceaux de rayons partiels (A, B) dédoublés superposés, avant de venir frapper les éléments détecteurs ($429_1$, $429_2$, $429_3$), passant respectivement à travers des éléments optiques de polarisation supplémentaires ($428_1$, $428_2$, $428_3$), de sorte que des signaux de balayage respectivement déphasés peuvent être générés par le biais des éléments détecteurs ($429_1$, $429_2$, $429_3$).

**13.** Dispositif de mesure de position optique selon la revendication 1, **caractérisé en ce que** l'unité de balayage (420) comporte au moins deux réflecteurs ($428_A$, $428_B$) par le biais desquels les deux faisceaux de rayons partiels (A, B) subissent un renvoi en direction de la règle graduée (410) et viennent frapper la règle graduée (410) de manière symétrique par rapport au plan de symétrie (SE) ainsi que sous des angles d'incidence ($\beta_1$, $\beta_2$) définis par rapport au plan de symétrie (SE), les angles d'incidence ($\beta_1$, $\beta_2$) étant choisis selon

$$\beta_2 = -\beta_1 = sin^{-1}\left(\frac{\lambda}{d_M \cdot cos(\alpha)}\right)$$

où :

$\beta_1$, $\beta_2$ = angles d'incidence
$\lambda$ = longueur d'onde de la lumière
$d_M$ = période de graduation de la graduation de mesure
$\alpha$ = angle de désalignement de la graduation de mesure par rapport au plan de symétrie.

Fig. 1a

Fig. 1b

Fig. 1c

Fig. 2a

Fig. 2b

Fig. 2c

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1762828 A2
- DE 102015203188 A1
- US 8730485 B2
- EP 2848899 A2